# EUROPEAN PATENT APPLICATION

(11) **EP 4 772 981 A1**
(43) Date of publication of application: **08.07.2026**
(21) Application number: 24879877.9
(22) Date of filing: 30.05.2024
(51) Int. Cl.: G06F 3/0484, G06F 3/04817, G06F 3/0482, G06F 3/041, G06F 9/451, G06Q 50/10, G06N 20/00, G06F 3/0481, G06F 3/14

(54) **ELECTRONIC DEVICE FOR SHARING CONTENT**

(30) Priority: 16.10.2023 KR 20230137850; 16.01.2024 KR 20240007015
(71) Applicant: Samsung Electronics Co., Ltd., Suwon-si, Gyeonggi-do 16677 (KR)
(72) Inventor: KIM, Junsung, Suwon-si, Gyeonggi-do 16677 (KR); KIM, Dukhyun, Suwon-si, Gyeonggi-do 16677 (KR); KIM, Sangheon, Suwon-si, Gyeonggi-do 16677 (KR); SON, Dongil, Suwon-si, Gyeonggi-do 16677 (KR); SONG, Yoechan, Suwon-si, Gyeonggi-do 16677 (KR); LIM, Yeunwook, Suwon-si, Gyeonggi-do 16677 (KR)
(74) Representative: Gulde & Partner
(86) International application number: PCT/KR2024/007395
(87) International publication number: WO 2025/084534

(57) **Abstract**

This electronic device comprises: a touch sensitive display; a processor connected to the display; and a memory which is connected to the processor and stores a first application, a second application, and instructions executed by the processor. The instructions, when executed by the processor, may cause the electronic device to: receive, from the display, a first user input requesting sharing of first content provided by the first application; display, on the display, a user interface that supports interaction with the user related to reproduction of the first content; receive a second user input from the display through the user interface; acquire second content generated by processing the first content on the basis of the second user input; and configure the second content to be usable by the second application.

## Description

### [Technical Field]

An embodiment of the disclosure relates to an electronic device for sharing content.

### [Background Art]

In an electronic device, applications are capable of sharing content. For example, a gallery application may provide a photo list to a user through a display. The gallery application may provide a photo selected by the user from the photo list to an application selected as a content sharing target, e.g., a message application.

The information described above is provided as a related art for helping understanding of the disclosure. No assertion or determination is made as to whether any content described above could be applied as prior art related to the disclosure.

### [Disclosure of Invention]

### [Technical Problem]

In an electronic device, applications may share content without modification.

In an embodiment of the disclosure, the electronic device may process original content into a new form. The electronic device may enable the applications to share the processed content. The technical task to be achieved by the disclosure is not limited to that mentioned above, and other technical tasks that are not mentioned above may be clearly understood to a person having common knowledge in the technical field to which the disclosure belongs based on the description provided below.

### [Solution to Problem]

According to an embodiment, an electronic device includes a touch-sensitive display, a processor, and a memory configured to store a first application, a second application, and instructions which are executed by the processor. The instructions, when executed by the processor, may cause the electronic device to receive, from the display, a first user input requesting to share first content provided by the first application, display, on the display, a user interface supporting interaction with a user in connection with regeneration of the first content, receive a second user input from the display through the user interface, obtain second content generated by processing the first content, based on the second user input, and configure the second content to be usable by the second application.

According to an embodiment, a method for operating an electronic device may include receiving a first user input requesting to share first content provided by the first application, displaying a user interface supporting interaction with a user in connection with processing of the first content, receiving a second user input through the user interface, obtaining second content generated by processing the first content, based on the second user input, and configuring the second content to be usable by the second application.

According to an embodiment, an electronic device includes a display, a processor, and a memory configured to store instructions. The instructions, when executed by the processor, may cause the electronic device to, based on a first user input input to the electronic device in connection with first content, display, on the display, a first screen for selecting a sharing member using second content associated with the first content, determine the sharing member using the second content, based on a second user input input to the electronic device in connection with the first screen, extract a feature of the first content, based on information stored in the electronic device and information on the sharing member, and display a second screen for modifying the extracted feature on the display, generate the second content by processing the extracted feature, based on a third user input input to the electronic device in connection with the second screen, and display the second content on a third screen associated with the sharing member.

### [Advantageous Effects of Invention]

An embodiment of the disclosure may provide an electronic device configured to process original content into a new form and enable applications to share the processed content. Various other effects identified directly or indirectly through this document may be provided.

### [Brief Description of Drawings]

FIG. 1 is a block diagram of an electronic device in a network environment according to various embodiments.
FIG. 2 is a block diagram of an electronic device configured to share content according to an embodiment.
FIG. 3 is a flowchart illustrating operations for sharing content in an electronic device according to an embodiment.
FIG. 4 is a flowchart illustrating operations for sharing content in an electronic device according to an embodiment.
FIG. 5 is a flowchart illustrating operations for sharing an image and text in an electronic device according to an embodiment.
FIG. 6 is a flowchart illustrating operations for sharing an image and text in an electronic device according to an embodiment.
FIG. 7 is a flowchart illustrating operations for sharing an image and text in an electronic device according to an embodiment.
FIGS. 8A, 8B, 8C, and 8D are diagrams illustrating operations of an electronic device for processing and sharing a captured image according to an embodiment.
FIGS. 9A, 9B, 9C, and 9D are diagrams illustrating operations of an electronic device for processing and sharing a drawn image according to an embodiment.
FIGS. 10A, 10B, and 10C are diagrams illustrating operations of an electronic device for configuring an attribute of a regenerated image according to an embodiment.
FIGS. 11A, 11B, 11C, and 11D are diagrams illustrating operations of an electronic device for configuring an attribute of a regenerated video according to an embodiment.
FIGS. 12A, 12B, and 12C are diagrams illustrating operations of an electronic device for extracting text from a drawn image and sharing the extracted text according to an embodiment.
FIG. 13 is a flowchart illustrating operations for sharing content in an electronic device according to an embodiment.
FIG. 14 is a flowchart illustrating operations for sharing content in an electronic device according to an embodiment.
FIG. 15 is a diagram illustrating a process of regenerating first content into second content according to an embodiment.
FIG. 16 is a flowchart illustrating operations for processing content in an electronic device according to an embodiment.
FIGS. 17A, 17B, 17C, and 17D are diagrams illustrating operations of an electronic device for processing and sharing an image according to an embodiment.
FIGS. 18A, 18B, 18C, and 18D are diagrams illustrating operations of an electronic device for processing and sharing an image according to an embodiment.
FIGS. 19A and 19B are diagrams illustrating operations of an electronic device for processing and sharing an image according to an embodiment.
FIGS. 20A and 20B are diagrams illustrating operations of an electronic device for processing and sharing an image according to an embodiment.

Hereinafter, embodiments of the disclosure will be described in detail with reference to the drawings so that a person having common knowledge in the technical field to which the disclosure belongs are able to readily carry out the embodiments. However, the disclosure may be implemented in various forms, and should not be construed as being limited to the embodiments set forth herein. In relation to the description of drawings, the same or similar elements may be indicated by the same or similar reference signs. In addition, in the drawings and related descriptions, description of well-known functions and configurations may be omitted of clarity and briefness.

### [Mode for the Invention]

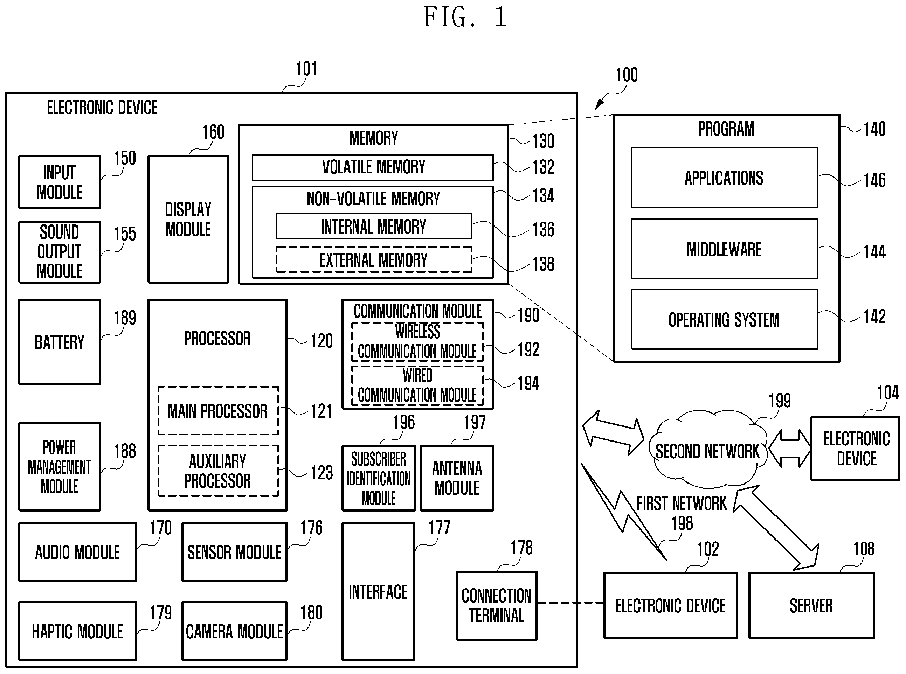

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultrareliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an interperipheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

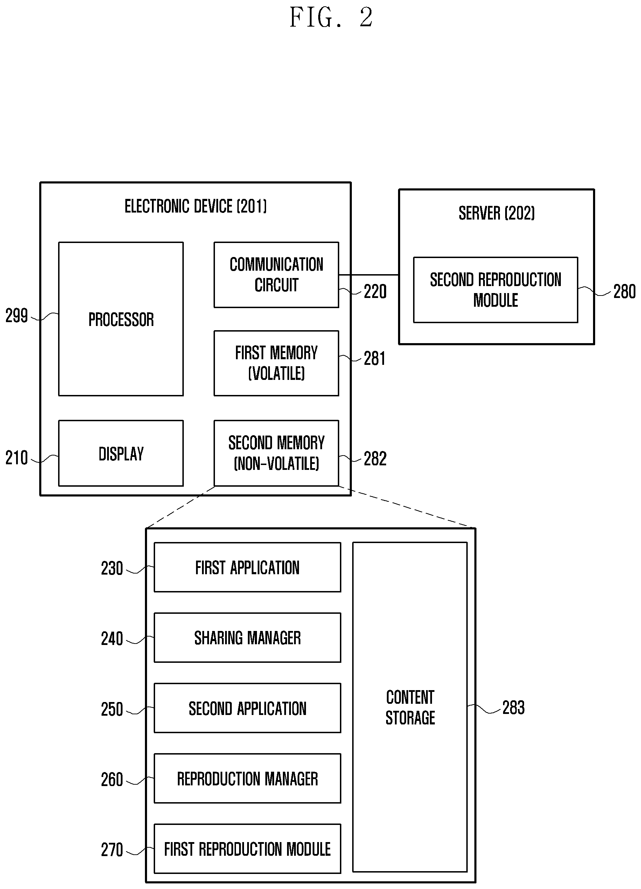

FIG. 2 is a block diagram of an electronic device 201 configured to share content according to an embodiment. Referring to FIG. 2, the electronic device 201 (e.g., the electronic device 101 in FIG. 1) may include a touch-sensitive display 210, a communication circuit 220, a first memory 281 that is volatile, a second memory 282 that is non-volatile, and/or a processor 299. According to an embodiment, the above elements of the electronic device 201 may be operatively, functionally, and/or electrically connected to each other. The display 210, the communication circuit 220, the first memory 281, the second memory 282, and the processor 299 may be implemented to be substantially identical to the display module 160, the communication module 190, the volatile memory 132, the non-volatile memory 134, and the processor 120 in FIG. 1, so as to perform the same functions, respectively. For example, the second memory 282 may store a program and a content storage 283. For example, the program (e.g., the program 140 in FIG. 1) may be stored in the second memory 282 as instructions and be loaded into the first memory 281 to be executed by the processor 299. When executed by the processor 299, the program may cause the electronic device 201 to perform given operations (e.g., content sharing or content regeneration). According to an embodiment, the program may include a first application 230, a sharing manager 240, a second application 250, a regeneration manager 260, and/or a first regeneration module 270.

The first application 230 may include a content generation application that generates content (e.g., text, an image, or a video) and stores the content in the content storage 283. For example, the content creation application may include at least one of a capture application that captures a screen displayed on the display 210 to generate a capture image, a camera application that generates an image or a video by using a camera (e.g., the camera module 180 in FIG. 1), and a drawing application that enables a user to draw a picture on the display 210 by using an input member (e.g., a digital pen or a finger) and generates a drawn image. The first application 230 may include a management application that accesses the content storage 283 and manages (e.g., deletes or edits) content stored in the content storage 283.

The sharing manager 240 may identify a piece of content designated to be shared (hereinafter, content to be shared) among pieces of content stored in the content storage 283 and may provide the content to be shared to the second application 250.

The second application 250 may perform at least one of an operation of outputting, to the display 210, content received from the first application 230 through the sharing manager 240 and an operation of transferring the content to an external device through the communication circuit 220. The second application 240 may include an application that uses the communication circuit 220 to enable two electronic devices 201 and 202 to exchange data therebetween. For example, the second application 240 may include at least one of a message application, a call application, a social network service (SNS) application, and an email application. The above applications mentioned as an example may also be the first application 230 that provides content to be shared. For example, content downloaded by the message application (an example of the first application 230) from an external device through the communication circuit 220 may be designated as content to be shared.

According to an embodiment, the regeneration manager 260 may, based on user input, regenerate (in other words, process) content (original) designated to be shared by using a regeneration module (e.g., the first regeneration module 270 or a second regeneration module 280) and may provide regenerated content (a modification) to the second application 250 instead of the original. For example, the regeneration module may include a generative model that is machine-learned to understand natural language (input value) (e.g., identify a user's intent on how the user wants to process content) and, based on the understanding, process the content (input value). Here, regeneration (or processing) may include an operation of correcting content (input value), based on natural language understanding or an operation of searching for other content similar thereto on the Internet and providing the discovered content. The generative model may receive an input value (a user input and an original) from the regeneration manager 260 and may provide an output value (a modification) to the regeneration manager 260. For example, the generative model may be machine-learned to extract text from an image. The generative model may include the extracted text in the output value and provide the output value to the regeneration manager 260. The generative model in the regeneration module may include, but is not limited to, Dall-E 2, Stable Diffusion, Midjourney, Imagen, or visual foundation models (VFM). The VFM may include, for example, bootstrapping language-image pre-training (BLIP), Stable Diffusion, Pix2Pix, ControlNet, or Detection. The input value provided to the generative model may be referred to as a prompt. The regeneration manager 260 that provides the prompt to the generative model may be referred to as a prompt manager.

According to an embodiment, the regeneration manager 260 may receive a user input from the display 210. For example, the regeneration manager 260 may display, on the display 210, an original and a keypad as a user interface (UI) that supports interaction with the user with respect to processing of the original. The regeneration manager 260 may include text (a user input) input by the user through the keypad in an input value and provide the input value to the generative model.

According to an embodiment, the regeneration module (e.g., the first regeneration module 270 and/or the second regeneration module 280) may further include an automatic speech recognition (ASR) model that is machine-learned to recognize speech and convert same into recognized text. When executed by the processor 299, the ASR model may receive speech data from a microphone (e.g., the input module 150), convert the speech data into text, and transfer the text (a user input) to the generative model.

According to an embodiment, the generative model in the first regeneration module 270 may be omitted from the electronic device 201. For example, to obtain a modification, the electronic device 201 may use the second regeneration module 280 included in the server 202 (e.g., the server 108 in FIG. 1). The regeneration manager 260 may transmit an input value (e.g., an original or user input (text)) to be input to the second regeneration module 280 to the server 202 through the communication circuit 220. The regeneration manager 260 may receive a result value of the second regeneration module 280 from the server 202 through the communication circuit 220 and may obtain a modification from the result value.

According to an embodiment, the ASR model in the first regeneration module 270 may be omitted from the electronic device 201. For example, to obtain text from speech data, the electronic device 201 may use the second regeneration module 280 included in the server 202. For example, the regeneration manager 260 may transmit speech data acquired from the microphone to the server 202 through the communication circuit 220. The regeneration manager 260 may receive text obtained by processing the speech data from the server 202 through the communication circuit 220 and may transfer the text (a user input) together with an original to the first regeneration module 270.

According to an embodiment, the first regeneration module 270 may be omitted from the electronic device 201. For example, the regeneration manager 260 may transmit speech data acquired from the microphone together with an original to the server 202 through the communication circuit 220. The server 202 may obtain text (a user input) from the speech data by using the second regeneration module 280 and, based on the user input, may process the original to obtain a modification. The regeneration manager 260 may receive a result value of the second regeneration module 280 from the server 202 through the communication circuit 220 and may obtain a modification from the result value.

According to an embodiment, the regeneration manager 260 may display, on the display 210, a pop-up window as a UI for receiving user feedback regarding a modification, for example, which enables the user to determine whether the second application 250 is to receive a modification. For example, if feedback identified through the pop-up window indicates that the second application 250 is to receive the modification, the regeneration manager 260 may transfer the modification to the second application 250. For example, if the feedback indicates that the second application 250 does not receive the modification, the regeneration manager 260 may request a second modification from the regeneration module (e.g., the first regeneration module 270 or the second regeneration module 280). Based on the request, the regeneration module may process the modification to obtain the second modification and may transfer the second modification to the regeneration manager 260.

According to an embodiment, processes residing in the first memory 281 (e.g., RAM) and being executed or in a standby state may include a background process and a foreground process (or top-layer process or non-background process). For example, a process (e.g., the first application 230 and the second application 250) corresponding to an execution screen of an application that is capable of interacting with a user by being displayed on the display 210 may be classified as the foreground process. A process (e.g., the sharing manager 240 and the regeneration manager 260) that is not displayed on the display 210 may be classified as the background process.

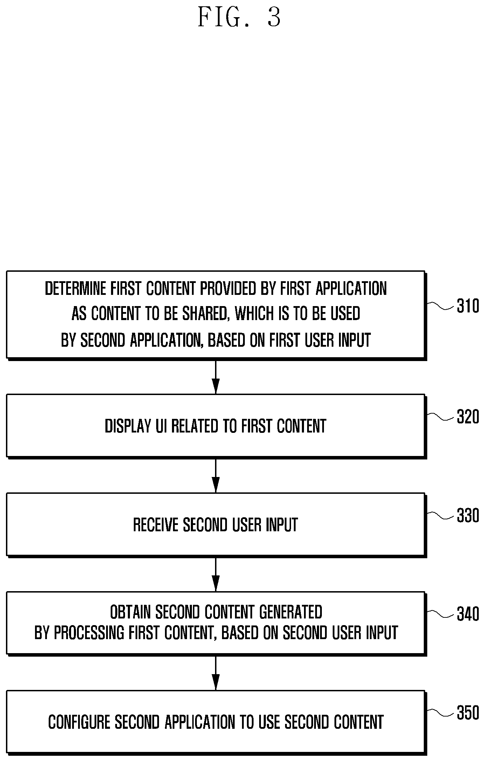

FIG. 3 is a flowchart illustrating operations for sharing content in the electronic device 201 according to an embodiment. When instructions (e.g., the sharing manager 240 and the regeneration manager 260) stored in the first memory 281 are executed by the processor 299 in the electronic device 201, the electronic device 201 may perform operations of FIG. 3.

In operation 310, the electronic device 201 may determine first content provided by the first application 230 as content to be shared, which is to be used by the second application 250, based on a first user input received from the display 210. For example, the electronic device 201 may display, on the display 210, a share button together with a capture image provided by a capture application (an example of the first application 230). The electronic device 201 may receive a user's selection (the first user input) of the share button from an input module (e.g., the touch-sensitive display 210) and, in response to the user's selection, may determine the capture image as the content to be shared. As another example, the electronic device 201 may display, on the display 210, a content list provided by a file management application (an example of the first application 230). The electronic device 201 may receive the user's selection (the first user input) of an item in the content list from the input module (e.g., the touch-sensitive display 210) and may determine content (e.g., an image or a video) corresponding to the selected item as the content to be shared. As another example, the electronic device 201 may display, on the display 210, a share button together with content (e.g., a photo or a video) provided by a gallery application (an example of the first application 230). The electronic device 201 may receive the user's selection (the first user input) of the share button from the input module (e.g., the touch-sensitive display 210) and, in response to the user's selection, may determine the content as the content to be shared. In addition, a copy managed in a clipboard (an example of the first application 230) may be determined as the content to be shared. Alternatively, content downloaded from an external device in a message application, a call application, a social network service (SNS) application, or an email application may be determined as the content to be shared.

In operation 320, the electronic device 201 may display, on the display 210, a UI that supports interaction with the user with respect to content regeneration using the first content. For example, the electronic device 201 may display, on the display 210, the UI including a keypad and an input field for displaying text which the user inputs to the electronic device 201 by manipulating the keypad displayed on the display 210.

In operation 330, the electronic device 201 may receive a second user input (e.g., text which the user inputs to the electronic device 201 by manipulating the keypad) from the display 210.

In operation 340, the electronic device 201 may obtain second content generated by processing the first content, based on the second user input. The electronic device 201 may input the first content and the second user input as the input value to the regeneration module (e.g., the first regeneration module 270 or the second regeneration module 280 in FIG. 2). For example, the regeneration module may include a generative model that is machine-learned to perform a diffusion process that decomposes the first content (e.g., an image) into respective objects, extracts context (e.g., a woman's face) for each object, and generates a new object by merging, for each object, the context with a prompt (e.g., a smiling face) capable of enhancement. The electronic device 201 may obtain the second content from an output value output from the regeneration module. For example, the electronic device 201 may obtain the second content by using the first regeneration module 270. In another example, the electronic device 201 may transmit the first content and the second user input to the second regeneration module 280 included in the server 202 through the communication circuit 220. The electronic device 201 may receive the second content from the second regeneration module 280 through the communication circuit 220.

In operation 350, the electronic device 201 may configure the second application 250 to use the second content. According to this configuration, the second application 250 may use the second content. For example, the electronic device 201 may display, on the display 210, an execution screen (e.g., a message window) of the second application 250 including the second content. The electronic device 201 may transmit the second content to an electronic device of a counterpart with which the user exchanges a message through the message window.

According to an embodiment, to obtain the second user input, an operation other than operations 320 and 330 may be performed. For example, the electronic device 201 may receive user speech through the microphone and obtain text (the second user input) from the user speech by using the regeneration module (e.g., the first regeneration module 270 or the second regeneration module 280).

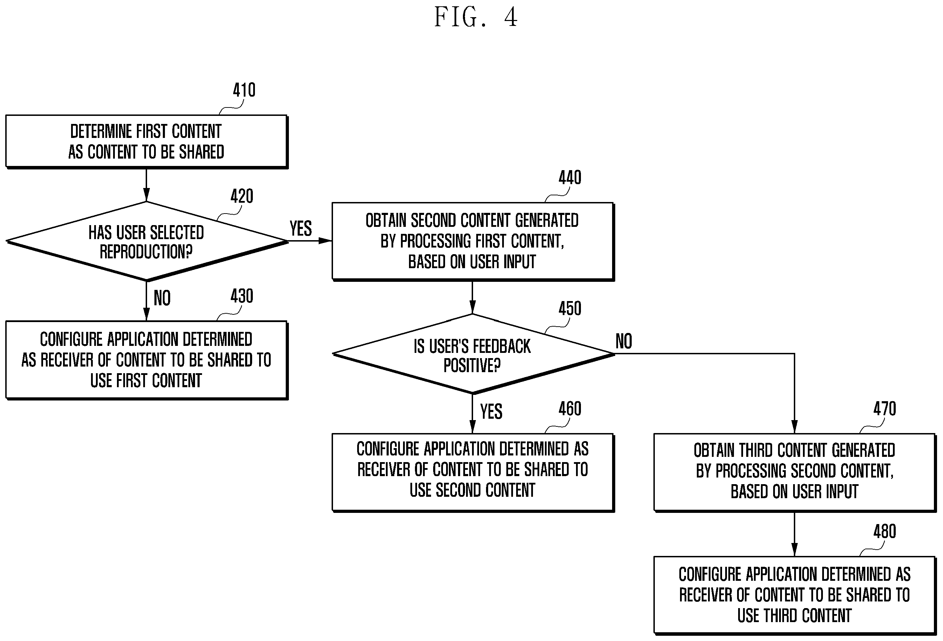

FIG. 4 is a flowchart illustrating operations for sharing content in the electronic device 201 according to an embodiment. When instructions (e.g., the sharing manager 240 and the regeneration manager 260) stored in the first memory 281 are executed by the processor 299 in the electronic device 201, the electronic device 201 may perform operations of FIG. 4.

In operation 410, the electronic device 201 may determine first content as content to be shared. For example, the first content may include an image and/or a video. The first content may be provided by the first application 230 (e.g., a message application (or app), a web browser, a file management application, or a gallery application) and may be, for example, content included in an execution screen of the first application 230 and displayed on the display 210. For example, the first content may be content corresponding to an item selected by a user from a content list displayed on the display 210. For example, the first content may be a copy (e.g., an image or text) stored in a clipboard or a capture image.

In operation 420, the electronic device 201 may determine whether the user has selected regeneration. For example, the electronic device 201 may display a UI that supports interaction with the user with respect to regeneration of the first content. The electronic device 201 may receive, through the UI, a user input (e.g., "change it to a smiling face," "convert the image into a video," "remove profane words from the sentence in the image and put the sentence back into the image," or "soften the tone of the sentence in the image and put the sentence back into the image") related to a method of processing the first content. In another example, the electronic device 201 may receive a user input through the microphone.

When it is determined that the user has not selected regeneration (e.g., when it is determined that text has not been received through the UI or speech has not been received through the microphone) (operation 420, No), in operation 430, the electronic device 201 may configure an application (e.g., the second application 250) determined as a receiver of the content to be shared to use the first content.

When it is determined that the user has selected regeneration (e.g., when it is determined that text is received through the UI or speech is received from the microphone) (operation 420, Yes), in operation 440, the electronic device 201 may obtain second content generated by processing the first content, based on a user input. The electronic device 201 may input the first content and the user input as an input value to the regeneration module and may obtain the second content from an output value output from the regeneration module. For example, the electronic device 201 may obtain the second content by using the first regeneration module 270. In another example, the electronic device 201 may transmit the first content and the user input to the second regeneration module 280 included in the server 202 through the communication circuit 220. The electronic device 201 may receive the second content from the second regeneration module 280 through the communication circuit 220.

In operation 450, the electronic device 201 may determine whether the user's feedback on the second content is a positive response. For example, the electronic device 201 may display a UI element (e.g., a pop-up window) for allowing the user to determine whether an application (e.g., the second application 250) determined as a receiver of the content to be shared is to use the second content.

When feedback identified through the UI element is a positive response (operation 450, Yes), in operation 460, the electronic device 201 may configure the application determined as the receiver to be able to use the second content.

When the feedback is a negative response (operation 450, No), in operation 470, the electronic device 201 may obtain third content generated by processing the second content (or an original (the first content)), based on a user input. In operation 480, the electronic device 201 may configure the application determined as the receiver to be able to use the third content.

According to an embodiment, before operation 480 is performed, the electronic device 201 may perform an operation of requesting the user's response to the third content again. When the user's response to the third content is positive, operation 480 may be performed, and when the user's response is negative, the electronic device 201 may perform an operation of obtaining fourth content.

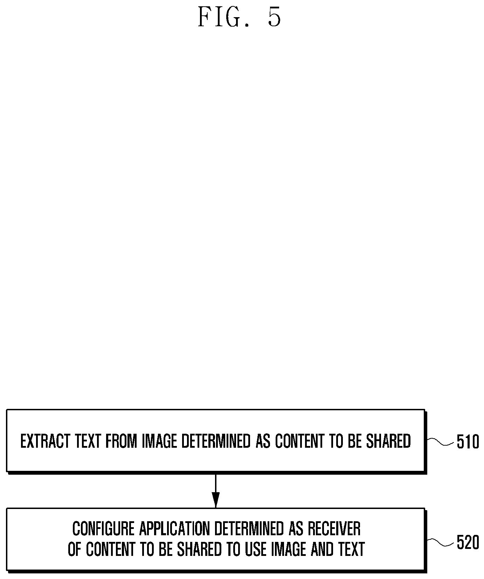

FIG. 5 is a flowchart illustrating operations for sharing an image and text in the electronic device 201 according to an embodiment. When instructions (e.g., the sharing manager 240 and the regeneration manager 260) stored in the first memory 281 are executed by the processor 299 in the electronic device 201, the electronic device 201 may perform operations of FIG. 5.

In operation 510, the electronic device 201 may extract text from an image determined as content to be shared. The electronic device 201 may use the first regeneration module 270 or the second regeneration module 280 to extract the text. Alternatively, a character recognition module (e.g., an optical character recognition (OCR) module) as software may be further included in the electronic device 201. The electronic device 201 may extract the text from the image by recognizing characters in the image. The electronic device 201 may determine to extract text from an image, based on a type of an application (e.g., the first application 230) that provides the image. For example, the electronic device 201 may extract text from a drawn image, based on the first application 230 being a drawing application. In an embodiment, the electronic device 201 may determine to extract text from an image, based on a type of an application (e.g., the second application 250) that is to receive the image. For example, the electronic device 201 may identify a function provided by an application from metadata of the application. When the application is an application (e.g., a memo pad or a note application) that provides a function enabling the user to take a memo by using a keypad or write letters by hand, the electronic device 201 may extract text from an image.

In operation 520, the electronic device 201 may configure an application determined as a receiver of the content to be shared to use the image and the text.

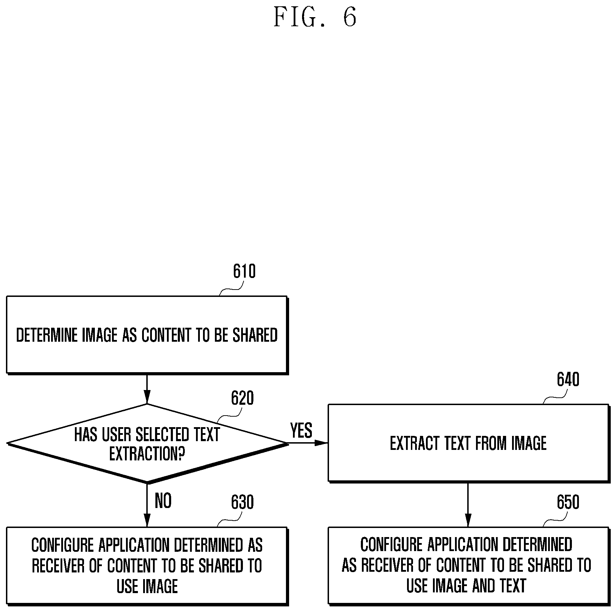

FIG. 6 is a flowchart illustrating operations for sharing an image and text in the electronic device 201 according to an embodiment. When instructions (e.g., the sharing manager 240 and the regeneration manager 260) stored in the first memory 281 are executed by the processor 299 in the electronic device 201, the electronic device 201 may perform operations of FIG. 6.

In operation 610, the electronic device 201 may determine an image as content to be shared. The image may be provided by the first application 230 (e.g., a message application (or app), a web browser, a file management application, or a gallery application) and may be, for example, an image included in an execution screen of the first application 230 and displayed on the display 210. The image may be an image corresponding to an item selected by a user from an image list displayed on the display 210. The image may be a copy stored in a clipboard or a capture image.

In operation 620, the electronic device 201 may identify whether the user has selected text extraction. For example, the electronic device 201 may display, on the display 210, a UI including an item enabling the user to select whether to perform character recognition, based on that an application that provides or receives the image as the content to be shared is a designated type of application (e.g., a drawing application or a memo pad).

When it is identified that the user has not selected text extraction (e.g., when sharing of the image is determined without selection of character recognition in the UI) (operation 620, No), in operation 630, the electronic device 201 may configure an application (e.g., the second application 250) determined as a receiver of the content to be shared to use the image.

When it is identified that the user has selected text extraction (e.g., when character recognition is selected in the UI and sharing of the image is determined) (operation 620, Yes), in operation 640, the electronic device 201 may extract text from the image. In operation 650, the electronic device 201 may configure the application (e.g., the second application 250) determined as the receiver of the content to be shared to use the image and the text.

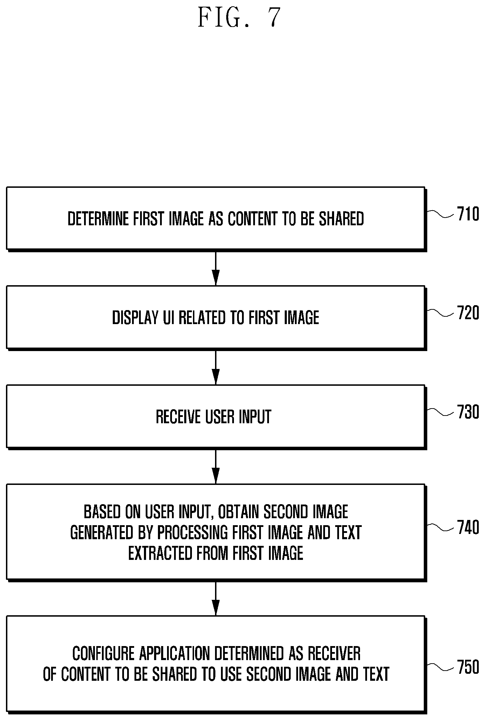

FIG. 7 is a flowchart illustrating operations for sharing an image and text in the electronic device 201 according to an embodiment. When instructions (e.g., the sharing manager 240 and the regeneration manager 260) stored in the first memory 281 are executed by the processor 299 in the electronic device 201, the electronic device 201 may perform operations of FIG. 7.

In operation 710, the electronic device 201 may determine a first image as content to be shared. The first image may be provided by the first application 230 (e.g., a message application (or app), a web browser, a file management application, or a gallery application) and may be, for example, an image included in an execution screen of the first application 230 and displayed on the display 210. The first image may be an image corresponding to an item selected by a user from an image list displayed on the display 210. The first image may be a copy stored in a clipboard or a capture image.

In operation 720, the electronic device 201 may display, on the display 210, a UI that supports interaction with the user with respect to regeneration of the first image. For example, the electronic device 201 may display, on the display 210, the UI including a keypad and an input field for displaying text which the user inputs to the electronic device 201 by manipulating the keypad displayed on the display 210.

In operation 730, the electronic device 201 may receive a user input (e.g., text which the user inputs to the electronic device 201 by manipulating the keypad) from the display 210.

In operation 740, the electronic device 201 may, based on the user input, obtain a second image generated by processing the first image and text extracted from the first image. The electronic device 201 may input the first image and the user input as an input value to the regeneration module and may obtain the second image and the text from an output value output from the regeneration module. For example, the electronic device 201 may obtain the second image and the text by using the first regeneration module 270. In another example, the electronic device 201 may transmit the first image and the user input to the second regeneration module 280 included in the server 202 through the communication circuit 220. The electronic device 201 may receive the second image and the text from the second regeneration module 280 through the communication circuit 220.

In operation 750, the electronic device 201 may configure the second application 250 to use the second image and the text.

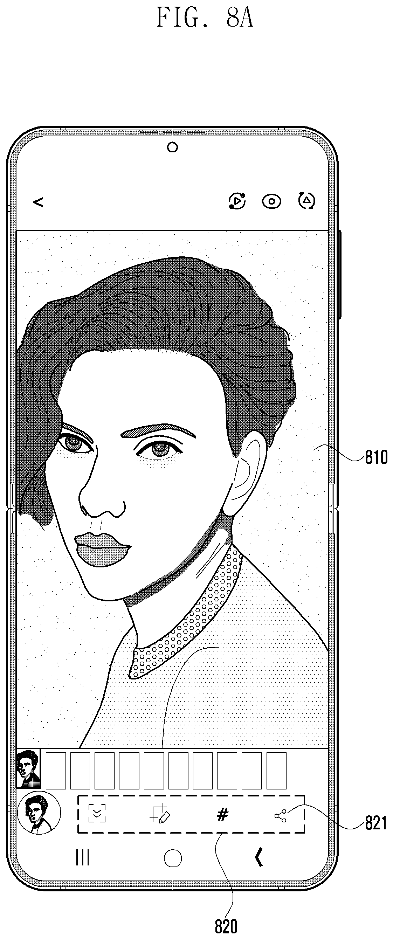

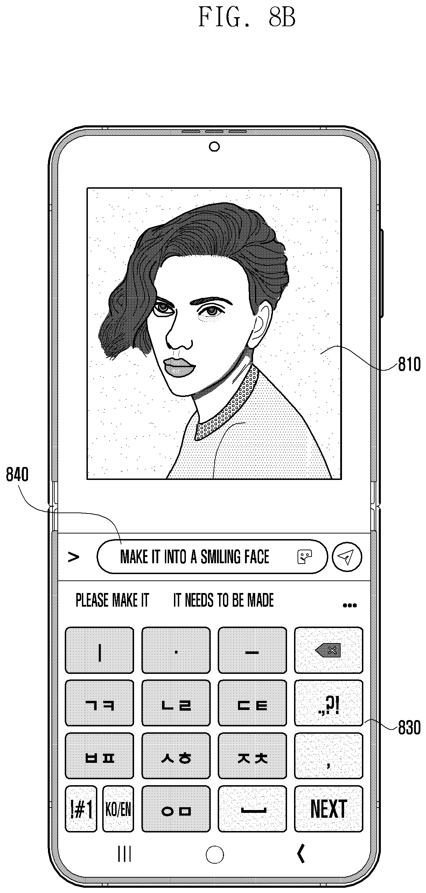

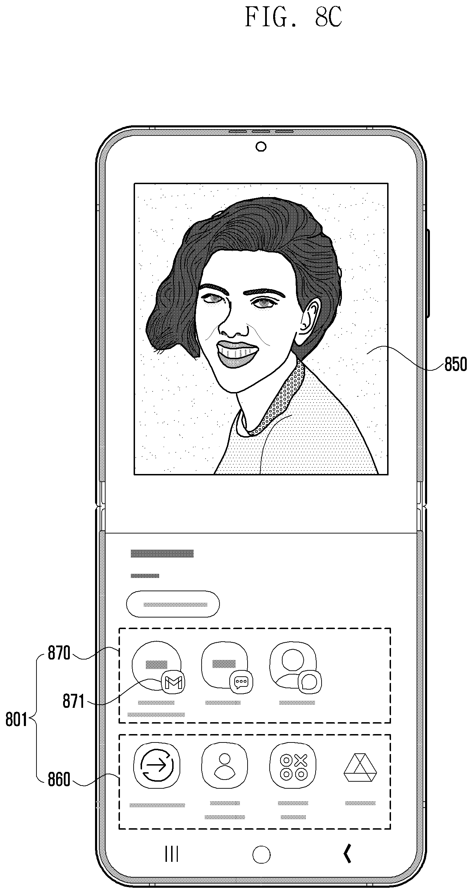

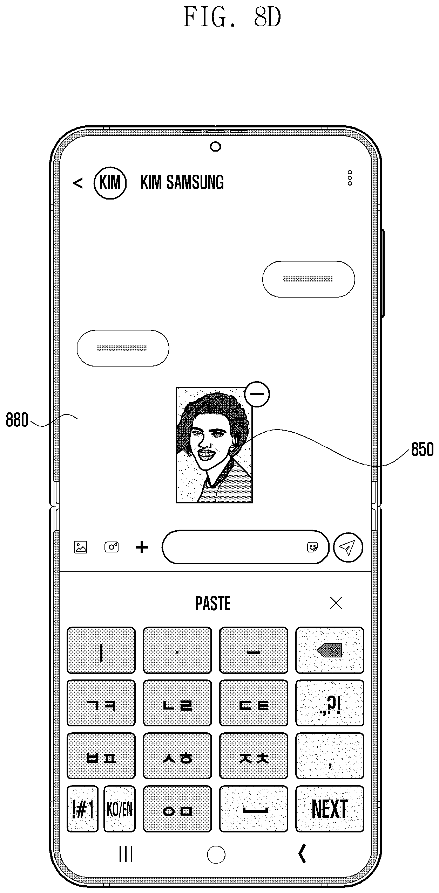

FIGS. 8A, 8B, 8C, and 8D are diagrams illustrating operations of an electronic device for processing and sharing a captured image according to an embodiment. When instructions stored in an electronic device (e.g., the electronic device 201) are executed by a processor of the electronic device, the electronic device may perform operations of FIGS. 8A, 8B, 8C, and 8D.

Referring to FIG. 8A, the electronic device (e.g., the electronic device 201 of FIG. 2) may display a captured image 810 and a UI 820 supporting interaction with a user with respect to the image 810. The electronic device may display the UI 820 including a share button 821.

Referring to FIG. 8B, in response to selection of the share button 821 (FIG. 8A) by the user, the electronic device may display, together with the image 810, a keypad 830 supporting interaction with the user with respect to processing of the image 810, and an input field 840 for displaying, to the user, text (e.g., make it into a smiling face) that the user inputs to the electronic device by using the keypad 830.

Referring to FIG. 8C, the electronic device may display an image 850 generated by processing the image 810 (FIG. 8B), based on a user input. The electronic device may acquire the processed image 850 by using a regeneration module (e.g., the first regeneration module 270 and/or the second regeneration module 280 of FIG. 2). The electronic device may display an application list 801 to enable the user to select an application with which the image 850 is to be shared. For example, the electronic device may display the application list 801 including application icons 860 respectively corresponding to applications with which the image is sharable. The electronic device may display the application list 801 including contact icons 870 representing counterparts exchanging messages with the user of the electronic device by including the contact icons 870. The electronic device may display, on each of the contact icons 870, an identifier 871 for enabling the user to identify an application with which the image 850 is to be shared. The electronic device may configure an application (e.g., a message application) corresponding to an icon selected by the user from the application list 801 to use the image 850. According to an embodiment, the electronic device may identify a feature of an application providing content to be shared from metadata of the application. The identified feature may include information indicating a function (e.g., screen capture, providing a photo captured using a camera, or providing text or an image temporarily stored in a clipboard) provided by the application. The electronic device may input, to the regeneration module as an input value, text (natural language) representing the identified feature (e.g., information indicating that the image 810 has been obtained through screen capture). The regeneration module may regenerate the image, based on the identified feature and output the regenerated image.

Referring to FIG. 8D, the electronic device may display the image 850 on an execution screen (e.g., a one-to-one chat window 880) of the application determined as a receiver, which is to receive the content to be shared, through the application list 801 (FIG. 8C).

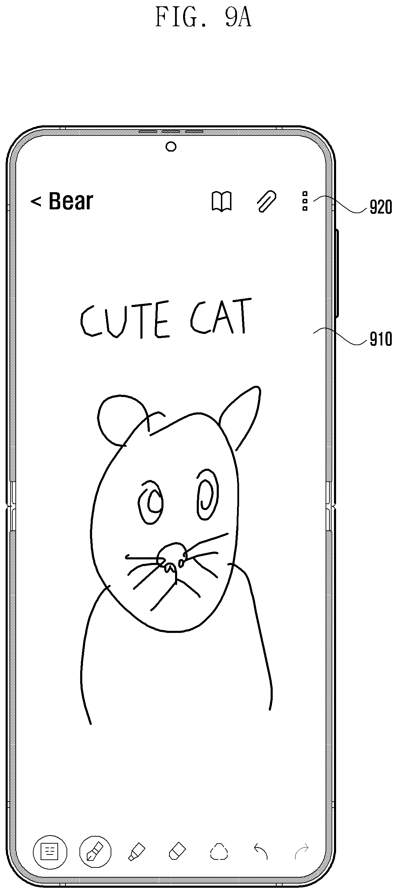

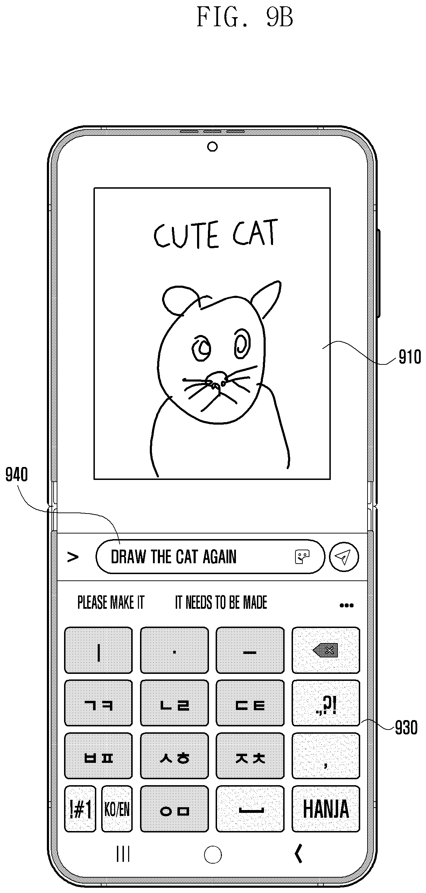

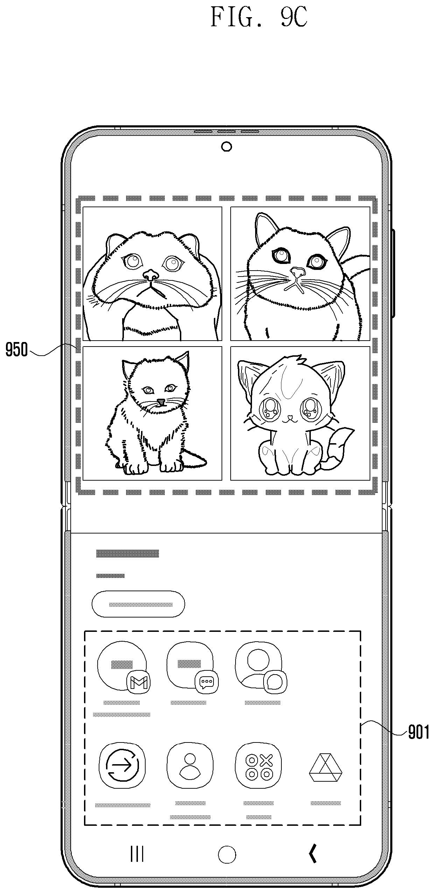

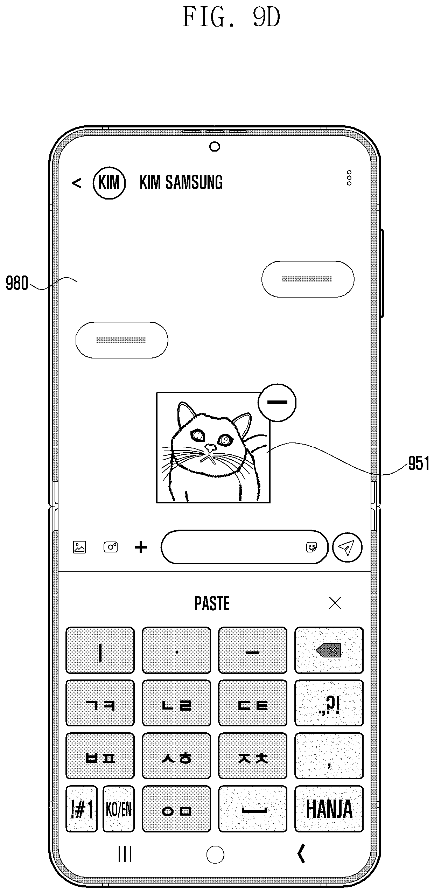

FIGS. 9A, 9B, 9C, and 9D are diagrams illustrating operations of an electronic device for processing and sharing a drawn image according to an embodiment. When instructions stored in an electronic device (e.g., the electronic device 201) are executed by a processor of the electronic device, the electronic device may perform operations of FIGS. 9A, 9B, 9C, and 9D.

Referring to FIG. 9A, an electronic device (e.g., the electronic device 201 of FIG. 2) may display a drawn image 910 and/or a menu icon 920. In response to touching of the menu icon 920 by a user, the electronic device may display a UI including a share button.

Referring to FIG. 9B, in response to selection of the share button by the user, the electronic device may display, together with the drawn image 910, a keypad 930 supporting interaction with the user with respect to processing of the drawn image 910, and an input field 940 for displaying, to the user, text (e.g., draw the cat again) that the user inputs to the electronic device by using the keypad 930.

Referring to FIG. 9C, the electronic device may display images 950 generated by processing the drawn image 910 (FIG. 9B), based on a user input. The electronic device may acquire the processed images 950 by using a regeneration module (e.g., the first regeneration module 270 and/or the second regeneration module 280 of FIG. 2). The electronic device may display an application list 901 (e.g., the application list 801 in FIG. 8C) to enable the user to select an application with which a processed image is to be shared. The electronic device may configure an application (e.g., a message application) corresponding to an icon selected by the user from the application list 901 to use the processed image.

Referring to FIG. 9D, the electronic device may display an image 951 selected by the user from among the images 950 (see FIG. 9C) on an execution screen (e.g., a one-to-one chat window 980) of the application determined as a receiver, which is to receive content to be shared, through the application list 901 (see FIG. 9C).

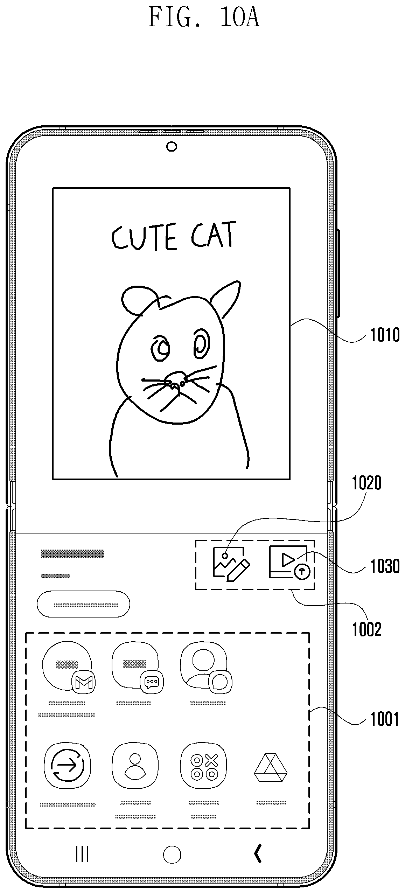

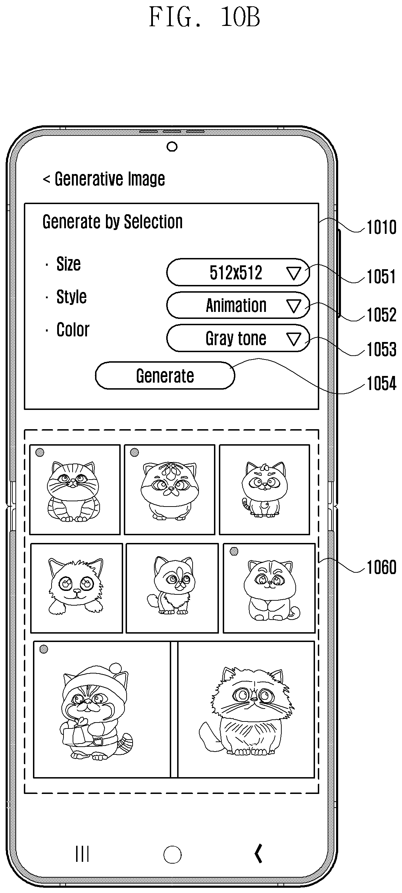

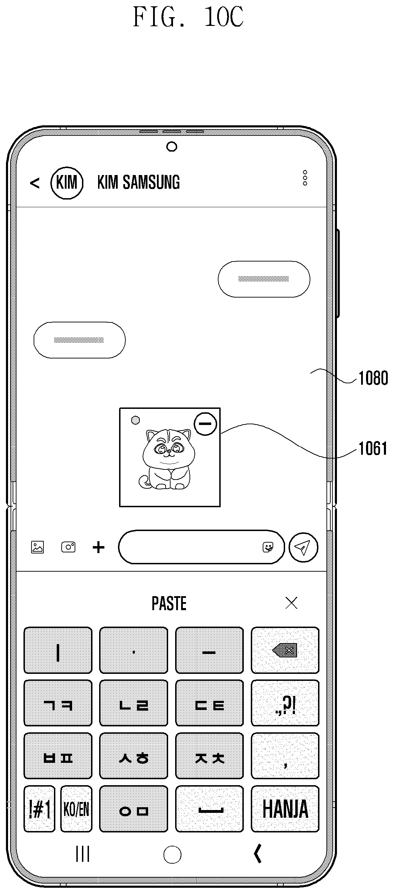

FIGS. 10A, 10B, and 10C are diagrams illustrating operations of an electronic device for configuring an attribute of a regenerated image according to an embodiment. When instructions stored in an electronic device (e.g., the electronic device 201) are executed by a processor of the electronic device, the electronic device may perform operations of FIGS. 10A, 10B, and 10C.

Referring to FIG. 10A, an electronic device (e.g., the electronic device 201 of FIG. 2) may display an image (e.g., a drawn image) 1010 designated to be shared. The electronic device may display an application list 1001 (e.g., the application list 801 in FIG. 8C) to enable a user to select an application with which the image is to be shared. The electronic device may display a menu 1002 supporting interaction with the user with respect to processing of the image 1010. The electronic device may display the menu 1002 including an icon 1020 representing a method of generating a new image (e.g., regenerating a 2D image into a 3D image), as a method of processing the image 1010, and/or an icon 1030 representing a method of regenerating the image into a video.

Referring to FIG. 10B, the electronic device may display a menu 1050 for enabling the user to determine an attribute of an image to be regenerated, in response to selection of image regeneration by the user (e.g., touching of the icon 1020 (see FIG. 10A)). For example, the electronic device may display the menu 1050 including an item 1051 for enabling the user to select a size of the image, an item 1052 for enabling the user to select a style of the image, and/or an item 1053 for enabling the user to select a color of the image. The electronic device may display images 1060 generated by processing the image 1010, based on a user input (e.g., an attribute value determined through the menu 1050). For example, in response to selection of a regeneration request button 1054, the electronic device may input the image 1010 and the attribute value to a regeneration module (e.g., the first regeneration module 270 or the second regeneration module 280) as an input value, and may acquire and display the images 1060 from output values produced by the regeneration module. According to an embodiment, the electronic device may identify a feature of an application determined as a receiver, which is to receive content to be shared, through the application list 1001 (see FIG. 10A), from metadata of the application. The identified feature may include, for example, information indicating a function (e.g., data communication, calling, memo, drawing, or document editing), provided by the application, information indicating a type (e.g., an image, a video, or text) of data receivable by the application from another application, and/or information representing a format (e.g., only a particular format (e.g., JPEG) is receivable among images) of receivable data. The electronic device may input, to the regeneration module, text (natural language) representing the identified feature as an input value. The regeneration module may regenerate the image, based on the identified feature and output the regenerated image. For example, if the application determined as the receiver which is to receive the content to be shared is able to receive an image but only in a particular format, a generative model may output, as output values, the images 1060 of the particular format.

Referring to FIG. 10C, the electronic device may display an image 1061 selected by the user from among the images 1060 (see FIG. 10B) on an execution screen (e.g., a one-to-one chat window 1080) of the application determined as the receiver, which is to receive the content to be shared, through the application list 1001 (see FIG. 10A).

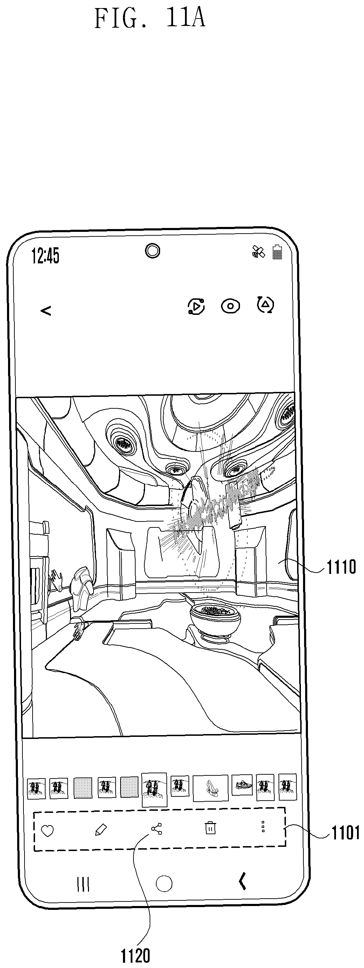

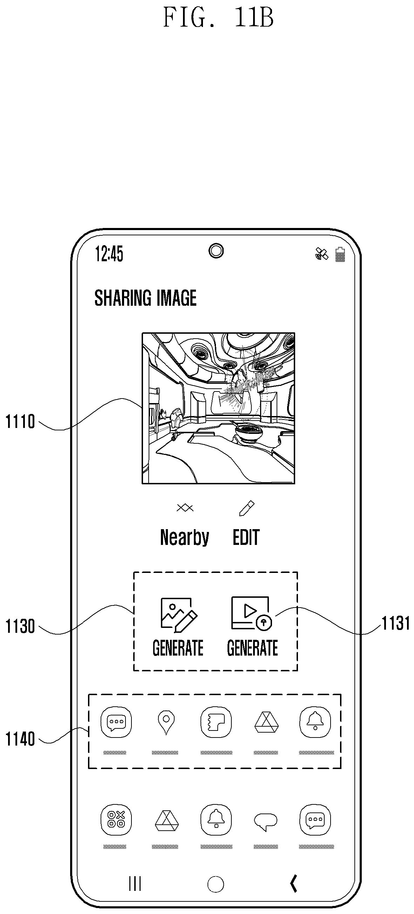

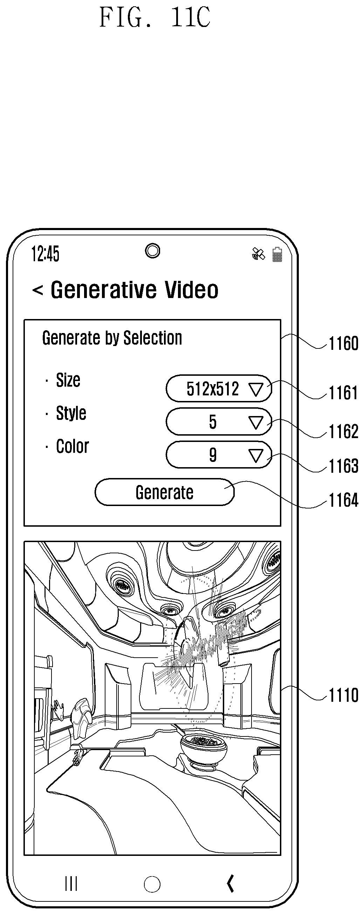

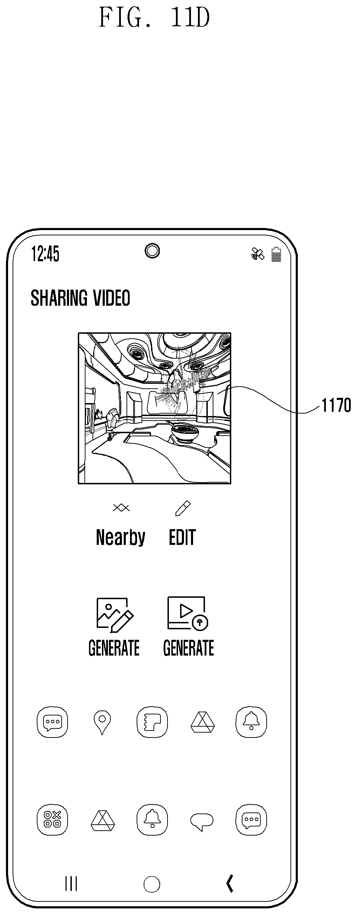

FIGS. 11A, 11B, 11C, and 11D are diagrams illustrating operations of an electronic device for configuring an attribute of a regenerated video according to an embodiment. When instructions stored in an electronic device (e.g., the electronic device 201) are executed by a processor of the electronic device, the electronic device may perform operations of FIGS. 11A, 11B, 11C, and 11D.

Referring to FIG. 11A, the electronic device (e.g., the electronic device 201 of FIG. 2) may display an image 1110 provided by an application (e.g., a gallery application) and a UI 1101 supporting interaction with a user with respect to the image 1110. The electronic device may display the UI 1101 including a share button 1120.

Referring to FIG. 11B, based on determination, by the user, to share the image 1110 (see FIG. 11A) (e.g., touching of the share button 1120 (see FIG. 11A)), the electronic device may display a menu 1130 (e.g., the menu 1002 in FIG. 10A) for enabling the user to select a regeneration method. The electronic device may display an application list 1140 (e.g., the application list 801 in FIG. 8C) to enable the user to select an application with which the image is to be shared.

Referring to FIG. 11C, the electronic device may display, together with the image 1110, a menu 1160 for enabling the user to determine an attribute of a video to be regenerated, in response to selection of video regeneration by the user (e.g., touching of an icon 1131 (see FIG. 11B)). For example, the electronic device may display the menu 1160 including an item 1161 for enabling the user to select a size of the video, an item 1162 for enabling the user to select a depth of the video, and/or an item 1163 for enabling the user to select a speed at which an object moves in the video.

Referring to FIG. 11D, the electronic device may play back a video 1170 generated by processing the image, based on a user input (e.g., an attribute value determined through the menu 1160 (see FIG. 11C)). For example, in response to selection of a regeneration request button 1164 (see FIG. 11C), the electronic device may input the image 1110 and the attribute value to a regeneration module (e.g., the first regeneration module 270 or the second regeneration module 280) as an input value, may acquire and display the video 1170 from an output value produced by the regeneration module, and may display the acquired video 1170 on the display (or play back the video through the display).

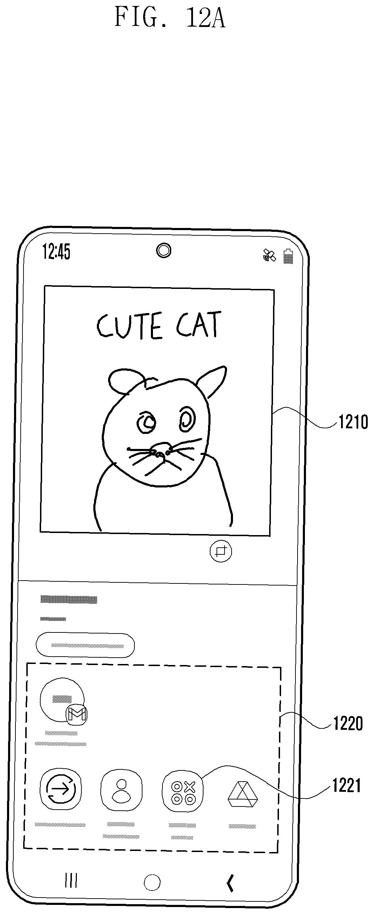

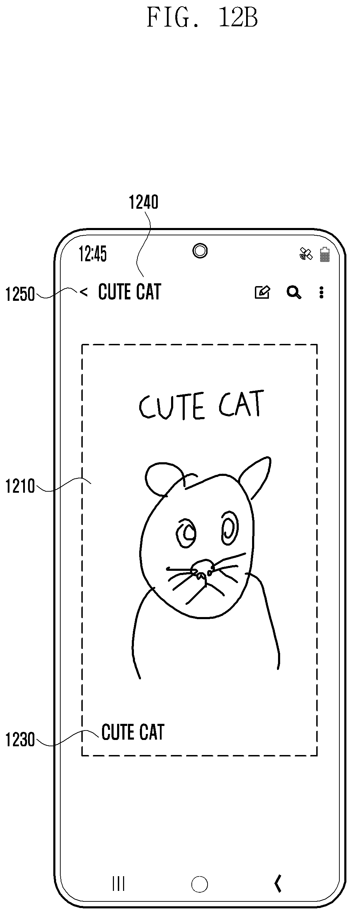

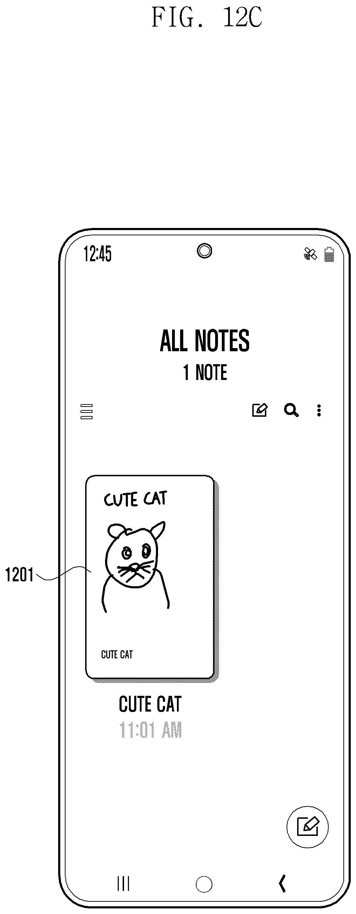

FIGS. 12A, 12B, and 12C are diagrams illustrating operations of an electronic device for extracting text from a drawn image and sharing the extracted text according to an embodiment. When instructions stored in an electronic device (e.g., the electronic device 201) are executed by a processor of the electronic device, the electronic device may perform operations of FIGS. 12A, 12B, and 12C.

Referring to FIG. 12A, an electronic device (e.g., the electronic device 201 of FIG. 2) may display an e.g., a drawn image 1210 designated to be shared. The electronic device may display an application list 1220 (e.g., the application list 801 in FIG. 8C) to enable a user to select an application with which the image is to be shared.

Referring to FIG. 12B, based on that a receiver which is to use the drawn image 1210 is determined (e.g., an icon 1121 (see FIG. 12A) is touched in the application list 1220) and an application determined as the receiver is a designated type of application (e.g., an application corresponding to the selected icon 1121 is a note application), the electronic device may extract text 1230 from the drawn image 1210. For example, the electronic device may use an OCR module or a regeneration module (e.g., the first regeneration module 270 or the second regeneration module 280) to extract the text. The electronic device may generate a note 1201 and display the note 1201 including the text 1230 and the drawn image 1210. For example, the electronic device may automatically generate a title 1240 of the note 1201 by using the extracted text 1230.

Referring to FIG. 12C, based on reception of a user input requesting a note list to be displayed (e.g., touching of an icon 1250 (see FIG. 12B)), the electronic device may display a note list including the note 1201.

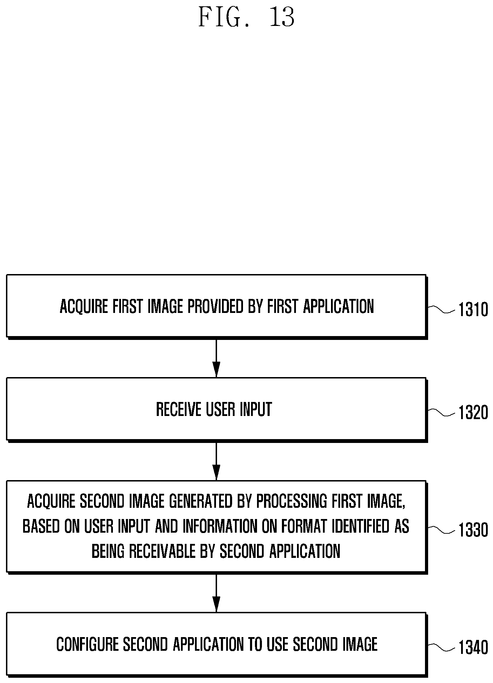

FIG. 13 is a flowchart illustrating operations for sharing content in the electronic device 201 according to an embodiment. When instructions (e.g., the sharing manager 240 and the regeneration manager 260) stored in the first memory 281 are executed by the processor 299 in the electronic device 201, the electronic device 201 may perform operations of FIG. 13.

In operation 1310, the electronic device 201 may acquire a first image provided by the first application 230 (e.g., capture, clipboard, or gallery).

In operation 1320, the electronic device 201 may receive a user input through a UI (e.g., a keypad) displayed on the display 210.

In operation 1330, the electronic device 201 may acquire a second image generated by processing the first image, based on the user input and information on a format identified as being receivable by the second application 350. The electronic device 201 may input the first image, the user input, and the information on the format as an input value to the regeneration module, and acquire, from an output value output from the regeneration module, the second image having the format receivable by the second application 350. For example, the electronic device 201 may obtain the second image by using the first regeneration module 270. In another example, the electronic device 201 may transmit the first image, the user input, the information on the format to the second regeneration module 280 included in the server 202 through the communication circuit 220. The electronic device 201 may receive the second image from the second regeneration module 280 through the communication circuit 220.

In operation 1340, the electronic device 201 may configure the second application 250 to use the second image.

According to an embodiment, content acquired by operation 1330 and used by the second application 250 may be a video instead of the second image. For example, the electronic device may display a menu (e.g., the menu 1130 in FIG. 11) for enabling a user to determine a regeneration method. When the regeneration method determined through the menu corresponds to video regeneration, the electronic device may acquire a video (e.g., a GIF format image) generated by processing the first image, based on a user input, information on a format, and an attribute value of the video, and configure the second application 250 to use the video.

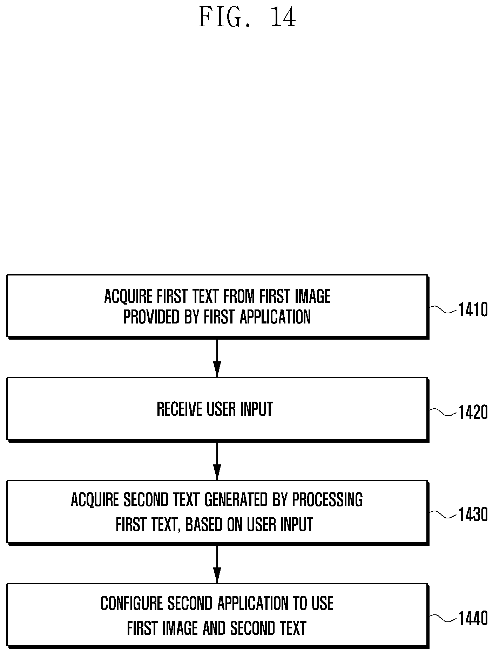

FIG. 14 is a flowchart illustrating operations for sharing content in the electronic device 201 according to an embodiment. When instructions (e.g., the sharing manager 240 and the regeneration manager 260) stored in the first memory 281 are executed by the processor 299 in the electronic device 201, the electronic device 201 may perform operations of FIG. 14.

In operation 1410, the electronic device 201 may acquire first text from a first image provided by the first application 230 (e.g., capture, clipboard, or gallery). For example, a character recognition module (e.g., OCR module) may be used for the text acquisition.

In operation 1420, the electronic device 201 may receive a user input (e.g., "remove slang," or "make the tone softer") related to a method of processing the first text, which is acquired through a UI (e.g., a keypad) displayed on the display 210.

In operation 1430, the electronic device 201 may obtain second text generated by processing the first text, based on the user input. For example, the electronic device 201 may input the first text and the user input as an input value to the regeneration module and may obtain the second text obtained by processing based on the user input, from an output value output from the regeneration module. For example, the electronic device 201 may obtain the second text by using the first regeneration module 270. In another example, the electronic device 201 may transmit the first text and the user input to the second regeneration module 280 included in the server 202 through the communication circuit 220. The electronic device 201 may receive the second text from the second regeneration module 280 through the communication circuit 220.

In operation 1440, the electronic device 201 may configure the second application 250 to use the first image and the second text.

According to an embodiment, content obtained by operation 1430 may further include a second image. For example, the electronic device 201 may input the first text, the first image, and a user input as an input value to the regeneration module and may obtain the second text and the second image obtained by processing based on the user input, from an output value output from the regeneration module. For example, the second image may be an image including the second text added thereto, instead of the first text. The electronic device 201 may configure the second application 250 to use the second image and the second text.

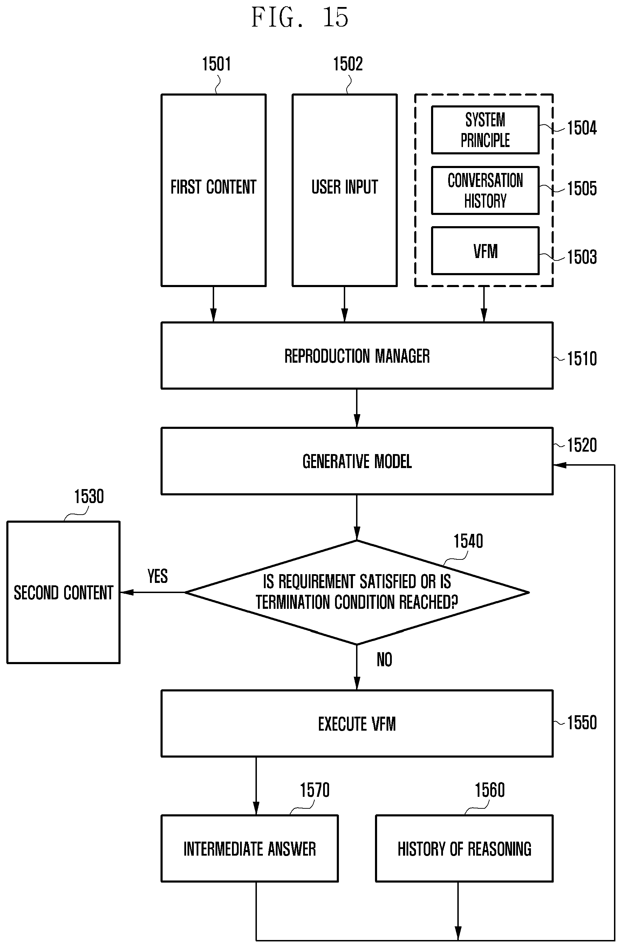

FIG. 15 is a diagram illustrating a process of regenerating first content into second content according to an embodiment.

Referring to FIG. 15, a regeneration manager 1510 (e.g., the regeneration manager 260 in FIG. 2) may be provided in an electronic device. The regeneration manager 1510 may receive first content 1501 designated to be shared from a first application. The regeneration manager 1510 may receive a user input 1502 from an input member (e.g., a touch-sensitive display and/or a microphone) included in the electronic device. The regeneration manager 1510 may, at least based on the user input 1502, process the first content 1501 into second content 1530 by using a generative model 1520 (e.g., the first regeneration module 270 and/or the second regeneration module 280 in FIG. 2) and provide the second content to a second application. For example, the generative model 1520 may control a function of a VFM 1503, designate input-output formats, convert visual information into a language format, and process a record, a priority, and a conflict of the VFM. The generative model 1520 may perform an operation 1540 of determining whether a user's requirement is satisfied (e.g., when the user's feedback on the content output from the generative model 1520 is positive (operation 450, Yes)) or whether a termination condition is reached. When the user's requirement fails to be satisfied or the termination condition fails to be reached (operation 1540, No), the generative model 1520 may perform an operation 1550 of executing the VFM. For example, the generative model 1520 may, based on the user input 840 (see FIG. 8b), process (regenerate) the original image 810 (see FIG. 8a) of an impassive face into the image 850 (see FIG. 8c) of a smiling face by using the VFM 1503.

When a user input (alternatively expressed as a user query) is received, the electronic device may perform prompt engineering. For example, the electronic device may generate the user input by extracting a context prompt for the original image by using captioning technology provided by OpenAI (e.g., CLIP (connecting text and images)). For example, the electronic device may automatically generate a prompt through a large language model (LLM) by using a directly written prompt.

A system principle 1504 and a conversation history 1505 between the user and the electronic device from a time point at which the user requests sharing may be provided to the generative model 1520 through the regeneration manager 1510. The generative model 1520 may additionally use the system principle 1504 and/or the conversation history 1505 for generation of the second content 1530.

A history of reasoning 1560 may be used to solve a complex problem through collaboration of VFMs (e.g., bootstrapping language-image pre-training (BLIP), Stable Diffusion, Pix2Pix, ControlNet, or Detection).

According to an embodiment, the regeneration manager 1510 may extract text from visual information (e.g., an image) so that the generative model 1520 is able to understand the text. For example, text may be extracted from the visual information by using a character recognition module (e.g., an OCR module) and transferred to the generative model 1520. Computer vision technology may be generally used to evaluate visual information and extract related information such as text extraction, object detection, and/or face recognition. The extracted information may be converted into a natural language format and used as an input for further analysis and/or response generation. The regeneration manager 1510 may convert visual information such as a portable network graphic (PNG) image, a depth image, and/or a mask matrix into text understandable by the generative model 1520. The regeneration manager 1510 may process histories, priorities, and conflicts of various VFMs.

According to an embodiment, the regeneration manager 1510 may perform a task by using computer vision, which is a field of artificial intelligence (AI) that enables a computer to extract useful information from a digital photo, a video, and other visual inputs and to perform a task or provide a recommendation, based on the extracted information. While AI enables a computer to think, computer vision enables a computer to see, observe, and understand. Computer vision may program a computer to enable the computer to analyze and understand an image down to a pixel level. Technically, a machine attempts to search for, interpret, and analyze visual data by using a specialized software algorithm. Deep learning uses a neural network algorithm and is a more efficient method for performing computer vision. By using a designated data sample, a pattern may be extracted by using a neural network.

The VFM 1503 is a computer vision model created to mimic early visual processing occurring in a human visual system. An artificial neural network (e.g., a convolutional neural network (CNN)) may be used in the VFM 1503. The artificial neural network may be trained on a large image data set in order to learn a set of hierarchical attributes applicable to a task such as object recognition, detection, and segmentation. In order to identify an object in an image, the VFM 1503 may initially divide the image into small sections and extract a histogram of information for each region. The VFM 1503 may compare the histogram with a histogram derived from a collection of training images including a relevant item. The VFM 1503 may regard a region similar to a training image as including an object of interest and may output a location and a class of the object. Bootstrapping language-image pre-training (BLIP), Stable Diffusion, Pix2Pix, ControlNet, or Detection may be included in the VFM 1503.

The generative model 1520 may generate multiple intermediate answers 1570 in order to obtain a final answer to a complex query by progressively invoking the VFM 1503 in a logical manner.

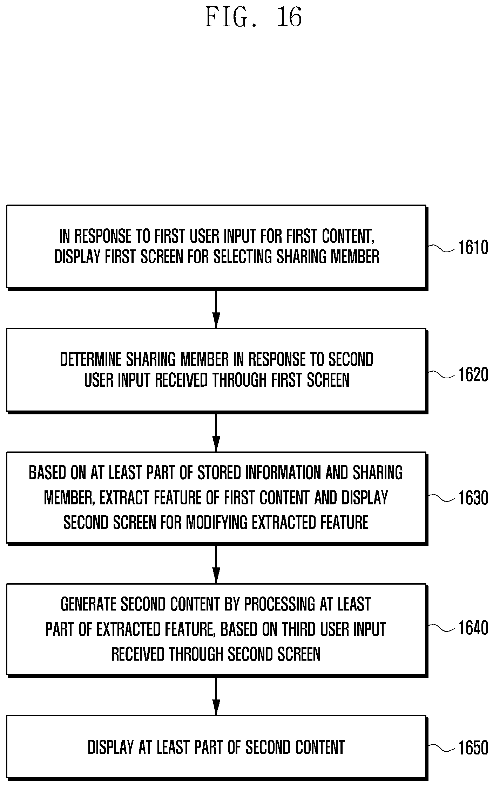

FIG. 16 is a flowchart illustrating operations for processing content in the electronic device 201 according to an embodiment. When instructions stored in the first memory 281 are executed by the processor 299 in the electronic device 201, the electronic device 201 may perform operations of FIG. 16. The electronic device 201 may use an artificial intelligence model (e.g., the first regeneration module 270 and/or the second regeneration module 280) when processing content.

In operation 1610, the electronic device 201 may, in response to a first user input for first content displayed on the display 210, display, on the display 210, a first screen (e.g., the application list 801) for selecting a sharing member (or a sharing method) for sharing the first content. The first content may be content provided by the first application 230.

In operation 1620, the electronic device 201 may determine a sharing member for sharing the first content, in response to a second user input received through the first screen. For example, the sharing member determined in operation 1620 may include, as a service provided to a user through the second application 250, a file transfer service (e.g., QuickShare), a posting-based service (e.g., Instagram), a message-based service (e.g., KakaoTalk), a content streaming service, an audio service, a photo service, a raw data transfer service, or a compressed data transfer service.

In operation 1630, the electronic device 201 may, based on at least a part of sharing-related information and the sharing member, extract a feature of first content and display, on the display 210, a second screen (e.g., a screen including the keypad 830 and the input field 840) for manipulating the extracted feature.

According to an embodiment, the sharing-related information may include information related to a recipient (e.g., a user of a first external electronic device that is connected to the electronic device 201 through a network and receives content from the electronic device 201). For example, the electronic device 201 may identify an age of the recipient through profile information of the recipient stored in the electronic device 201. As another example, the electronic device 201 may receive information of the recipient through the communication circuit 220 and identify the age of the recipient from the received information. The electronic device 201 may, based on the identified age, display, on the display 210, the second screen including a menu for enabling modification of the original (the first content). For example, when the age corresponds to a young child, the electronic device 201 may display the menu including an item for enabling a facial expression of a character in the first content to be processed into a cute expression, a pretty expression, or a brightly smiling expression.

According to an embodiment, the sharing-related information may include previous sharing history information. For example, the electronic device 201 may identify history information stored in the electronic device 201 and, based on the identified history information (e.g., information indicating how content has been processed), display, on the display 210, the second screen including a menu for enabling modification of the original (the first content). For example, when the history information includes a history in which a size of content has been changed, the electronic device 201 may display the menu an item for enabling a change to the size of the history.

According to an embodiment, the sharing-related information may include information related to an attribute of a network (e.g., a network connecting the electronic device 201 and the first external electronic device). For example, the electronic device 201 may identify a network speed from a connected network (e.g., LTE, 5G, or Wi-Fi) and, based on the identified network speed, display, on the display 210, the second screen including a menu for enabling the user to select a size of content to be transmitted to the first external electronic device. For example, when the network speed is identified as being relatively low, the electronic device 201 may display the menu including an item for enabling reduction of the size of the first content.

According to an embodiment, the sharing-related information may include information related to a content security configuration. For example, when the original (the first content) includes information (e.g., a resident registration number) requiring protection, the electronic device 201 may display, on the display 210, the second screen including a menu for enabling processing of the original according to protection levels of personal information.

According to an embodiment, the sharing-related information may include information on a capability (e.g., a resolution or a screen size) of a content reception device (the first external electronic device). For example, the electronic device 201 may receive information indicating a capability of the content receiving device through a network and, based on the received capability information, display, on the display 210, the second screen including a menu for enabling the user to select an attribute (e.g., a size or a format) of content to be transmitted.

According to an embodiment, the sharing-related information may include learning data stored in the electronic device 201. For example, the electronic device 201 may display, on the display 210, the second screen including a menu for enabling the user to select learning data to be used by the regeneration module (e.g., DALL·E 2, Stable Diffusion, Midjourney, Imagen, or visual foundation models (VFM)) when processing the first content. For example, when a recipient receiving content from the electronic device 201 is identified as being a young child, the electronic device 201 may display the menu including an item for enabling the user to select a piece of learning data to be used from among multiple pieces of learning data for young children, or an indicator indicating that learning data for young children, among learning data for adults and the learning data for young children, is to be used for processing the first content.

According to an embodiment, at least a part of the sharing-related information may be stored in the second memory 282 of the electronic device 201. For example, at least a part of the sharing-related information may be stored in the server 202. When extracting the feature of the first content, the electronic device 201 may receive information from the server 202 through the communication circuit 220. The sharing-related information may include data (e.g., illuminance) that the electronic device 201 acquires from surroundings thereof by using a sensor.

For example, the second screen may be a screen including a drop box, a check box, and/or a slide. For example, the electronic device 201 may display, on the display 210, at least one of the drop box, the check box, and the slide, which includes a recommended configuration.

As another example, the electronic device 201 may display, on the display 210, the second screen including a prompt recommended to the user with respect to processing of the first content and a text input box.

As another example, the electronic device 201 may display, on the display 210, the second screen including an upload interface for transmitting content (e.g., an image or a video) usable as a reference for the first content to the content reception device (the first external electronic device).

As another example, the electronic device 201 may transform the first content, based on a designated recommended configuration, and display, on the display 210, the second screen including the transformed first content.

As another example, the electronic device 201 may display, on the display 210, the second screen including an item for enabling selection of a recommended keyword and/or learning data.

According to an embodiment, when the second application 250 determined as the sharing member provides the file transfer service, the electronic device 201 may identify a format of content provided by the second application 250 and identify a function provided by the second application 250. The identified function may include, for example, uploading of a file (e.g., a photo or a video). The electronic device 201 may display, on the display 210, the second screen including a menu for enabling a type of the original (the first content) to be changed to a photo or a video.

According to an embodiment, when the second application 250 determined as the sharing member provides the message-based service, the electronic device 201 may display, on the display 210, the second screen including a menu for enabling the user to select a maximum size of content transmittable to another electronic device through the message-based service, an image format, whether an original is transmitted, or whether a modification is transmitted.

According to an embodiment, when the second application 250 determined as the sharing member provides the audio service, the electronic device 201 may display, on the display 210, the second screen including a menu for enabling the user to select conversion of the first content, which is an image or a video, into a music file.

According to an embodiment, when the second application 250 determined as the sharing member provides the photo service, the electronic device 201 may display, on the display 210, the second screen including a menu for enabling the user to select image conversion.

According to an embodiment, when the second application 250 determined as the sharing member provides the raw data transfer service or the compressed data transfer service, the electronic device 201 may display, on the display 210, the second screen including a menu for enabling the user to select whether compression is performed and/or a compression format.

In operation 1640, the electronic device 201 may generate second content by processing at least a part of the extracted feature, based on a third user input received through the second screen.

For example, the feature extracted in operation 1630 may include information on a size, a shape, a format, and/or a type. For example, the electronic device 201 may generate the second content by changing a type, a size, a ratio, or a resolution of the first content.

As another example, the feature extracted in operation 1630 may include information on focus and/or depth. For example, the electronic device 201 may generate the second content by adjusting focus or depth of an object in the first content (e.g., out-focusing a main subject).

As another example, the feature extracted in operation 1630 may include information (e.g., region information) on a face. For example, the electronic device 201 may generate the second content by processing a face in the first content (e.g., changing the expression of the face or blurring objects other than the face).

As another example, the feature extracted in operation 1630 may include character-related information (e.g., a signboard, text, or a foreign language). For example, the electronic device 201 may generate the second content by processing the character-related information (e.g., translating a foreign language or blurring sensitive words (e.g., a resident registration number)).

As another example, the feature extracted in operation 1630 may include information on clothing. For example, the electronic device 201 may generate the second content by processing the clothing-related information (e.g., covering an exposed body part or changing to different clothing).

As another example, the feature extracted in operation 1630 may include information related to a posture. For example, the electronic device 201 may generate the second content by processing the posture-related information (e.g., changing a hand sign or changing from a sitting posture to a standing posture).

As another example, the feature extracted in operation 1630 may include information related to a background. For example, the electronic device 201 may generate the second content by processing the background-related information (e.g., changing a background of a subject from outdoors to indoors).

According to an embodiment, the electronic device 201 may generate the second content of a type different from the first content. For example, when the first content is an image, the second content may be a video. When generating the video, the electronic device 201 may use other content (e.g., a photo, a video, music, or speech) stored in the electronic device 201 and/or a second external electronic device (e.g., the server 202).

In operation 1650, the electronic device 201 may display at least a part of the second content on the display 210. For example, the electronic device 201 may display, on the display 210, a process in which the first content is transformed into the second content in real time.

According to an embodiment, the electronic device 201 may transmit the second content to the first external electronic device or a third external electronic device. For example, the electronic device 201 may transmit the second content to the first external electronic device connected through the first network 198. As another example, the electronic device 201 may transmit the second content to the third external electronic device (e.g., a server providing the posting-based service) connected through the second network 199.

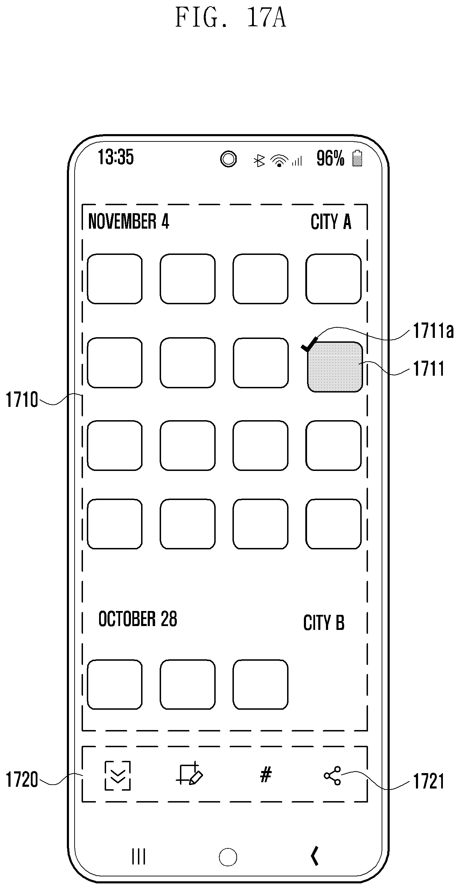

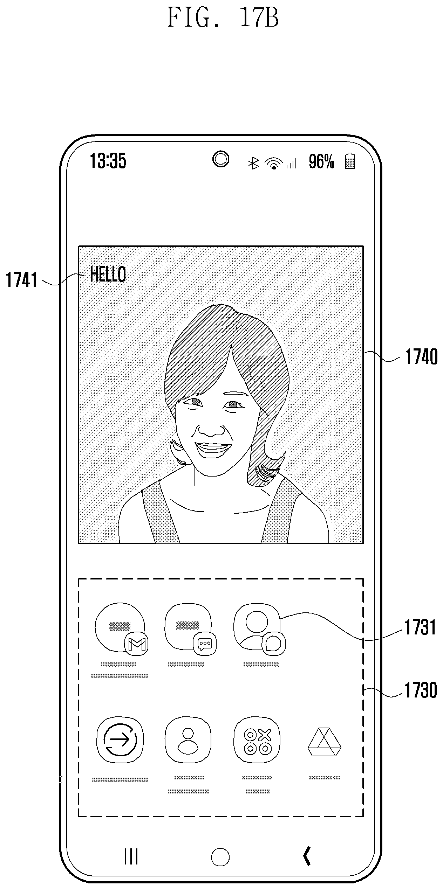

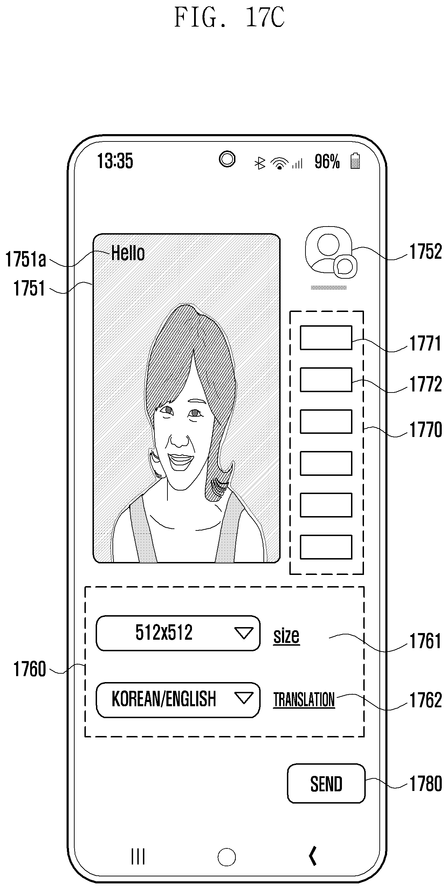

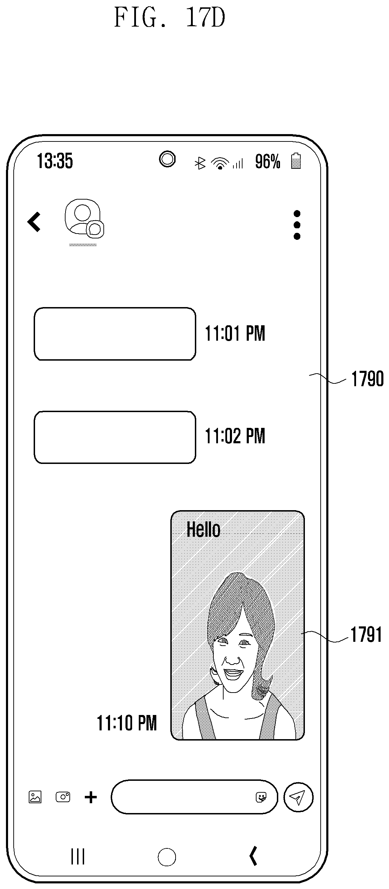

FIGS. 17A, 17B, 17C, and 17D are diagrams illustrating operations of an electronic device for processing and sharing an image according to an embodiment. When instructions stored in an electronic device (e.g., the electronic device 201) are executed by a processor of the electronic device, the electronic device may perform operations of FIGS. 17A, 17B, 17C, and 17D.

Referring to FIG. 17A, the electronic device may display images 1710 provided by a first application (e.g., a gallery application). For example, the electronic device may display the images 1710 by classifying the images according to dates and locations at which the images have been generated (e.g., captured). Based on selection of one or more of the images 1710 (e.g., touching of an image 1711), the electronic device may display a menu (alternatively expressed as a user interface (UI) or a user experience (UX)) 1720 for supporting interaction with a user with respect to the selected image. The electronic device may display the menu 1720 including a share button 1721. According to an embodiment, the electronic device may display an indicator for enabling the user to distinguish between a selected image and an unselected image. For example, the electronic device may display a check pattern 1711a on the selected image 1711.

Referring to FIG. 17B, in response to selection of the share button 1721 (see FIG. 17A) by the user, the electronic device may display an application list 1730 (e.g., the application list 801 in FIG. 8C) as a first screen for selecting (e.g., the first user input in FIG. 16) a sharing member. The electronic device may display a selected image (e.g., a first image 1740) together with the application list 1730.

Referring to FIG. 17C, in response to selection (e.g., the second user input in FIG. 16) of a sharing member from the application list 1730 (see FIG. 17B), the electronic device may display a second screen for processing the first image 1740 (see FIG. 17B).

According to an embodiment, the electronic device may identify (and/or extract) a feature (or an attribute) of the first image 1740 (see FIG. 17B), based on information (e.g., information indicating a function or service provided by a second application) on a second application determined as a sharing member and/or sharing-related information (e.g., when a provided service is message transmission, a default value related to a size (a data amount) of a message transmittable at one time). The electronic device may display the second screen including a second image 1751 generated by processing the first image 1740, based on the identified feature of the first image 1740. For example, the electronic device may identify a size of the first image 1740 and generate the second image 1751 by processing the first image 1740 to have a size (e.g., 512 (width) * 512 (height)) designated as a default value. As another example, based on configuring of Korean/English translation as a translation default value, the electronic device may extract Korean text 1741 (see FIG. 7B) from the first image 1740, convert the Korean text 1741 into English text 1751a, and display the second image 1751 including the English text 1751a. The electronic device may use a regeneration module (e.g., the first regeneration module 270 and/or the second regeneration module 280 in FIG. 2) in order to process the first image 1740 and obtain the second image 1751. According to an embodiment, when Korean/English translation is not configured as a default value, the second image 1751 may include the Korean text 1741 (see FIG. 7B) instead of the English text 1751a. Alternatively, in response to selection, by the user, of an item 1762 for enabling Korean/English translation, the electronic device may display the second image 1751 including the English text 1751a instead of the Korean text 1741.

According to an embodiment, the electronic device may display the second screen including information indicating a sharing member determined based on a user input (e.g., a touch on a contact icon 1731 (FIG. 7B)) input to the electronic device through the first screen. For example, the electronic device may display an icon 1752 selected from the application list 1730 (see FIG. 7B).

According to an embodiment, the electronic device may display the second screen including a menu 1760 for enabling the user to select (e.g., the third user input in FIG. 16) an attribute (or a feature) of the second image 1751. For example, the electronic device may display the menu 1760 including an item 1761 for changing a size different from the default value (e.g., 512 * 512). As another example, the electronic device may display the menu 1760 including the item 1762 for translation to a different language (e.g., German) instead of Korean/English translation configured as the default value. According to an embodiment, an item other than the items 1761 and 1762 may be further included in the menu 1760. For example, an item for adjusting a protection level of personal information and/or an item for blurring a specific object in an image may be further included in the menu 1760. The electronic device may additionally process and display the second image 1751, based on a user input that is input to the electronic device through the menu 1760.

According to an embodiment, the electronic device may display the second screen including a menu 1770 for enabling the user to change the sharing member and/or a counterpart who is to receive the second image 1751.

For example, when an application icon 1771 is selected in the menu 1770, the electronic device may change the sharing member to an application corresponding to the selected application icon 1771. The electronic device may replace the icon 1752 with the application icon 1771. As another example, when a contact icon 1772 is selected in the menu 1770, the electronic device may change the target who is to receive the second image 1751 to a counterpart corresponding to the selected contact icon 1772. The electronic device may replace the icon 1752 with the contact icon 1772.

According to an embodiment, the icon 1752 may be an icon indicating a sharing member (e.g., an application selected from the application list 1730). When the user selects the icon 1752, the electronic device may display a sharing member list (e.g., a sharing member (e.g., the application list 1730)) again so as to enable the user to change the sharing member.

According to an embodiment, the menu 1770 may include a list indicating information of a recipient who is to receive a target to be shared (e.g., the second image 1751). Each of the icons 1771 and 1772 in the menu 1770 may be an icon representing a recipient name from contacts stored in the electronic device. The electronic device may configure the list by using an address book corresponding to an application selected as a sharing member. The electronic device may also configure the list by using an address book corresponding to another application. For example, when the user selects an icon (e.g., the icon 1771 or 1772) from the list, the electronic device may display an indicator indicating that the icon has been selected. For example, a color or a border of the icon may be changed. A check pattern may be displayed on the icon. As another example, when the user selects an icon (e.g., the icon 1771 or 1772) from the list, the electronic device may change a default value of a menu for processing an image, based on information on a selected recipient. For example, when a recipient stored with a German name is selected, the electronic device may change a default translation to German and, based on the changed default translation, convert languages included in the image into German. As another example, when a phone number of the selected recipient is an Arabic-region phone number, the electronic device may identify that a hand sign or gesture included in a corresponding photo is a hand sign taboo in an Arabic region and may transform the hand sign into another form and display the transformed hand sign.

Referring to FIG. 17D, the electronic device may display an execution screen (e.g., a message window 1790) of the application determined as the sharing member, the execution screen including a modification image 1791 obtained by processing based on the feature extracted (and/or identified) from the original image. For example, when a send button 1780 (see FIG. 17C) is selected, the electronic device may load the message window 1790 from a memory and display the modification image 1791 (e.g., the second image 1751 (FIG. 17B)) in the message window. In addition, the electronic device may transmit the modification image 1791 to an electronic device of the counterpart through the sharing member.

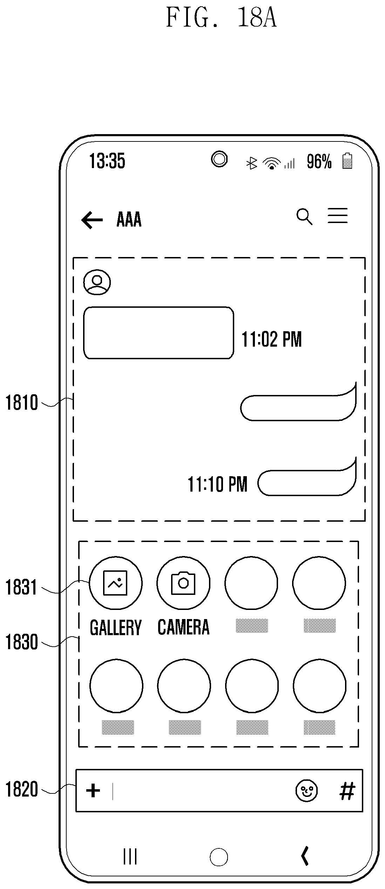

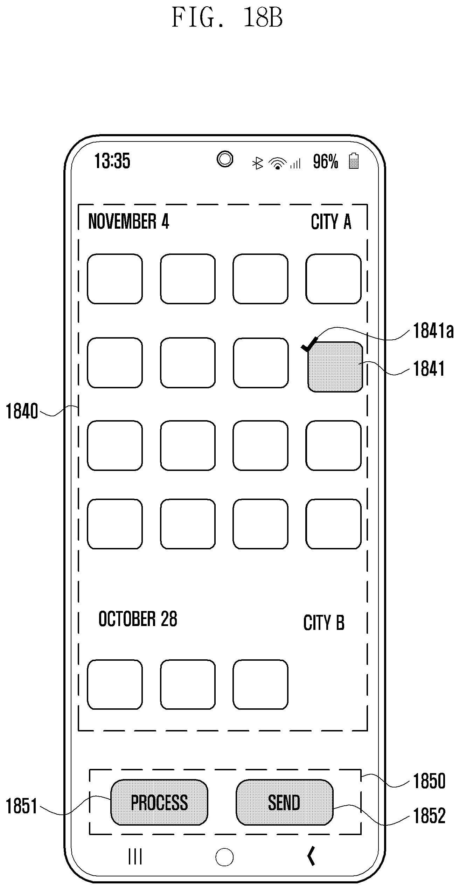

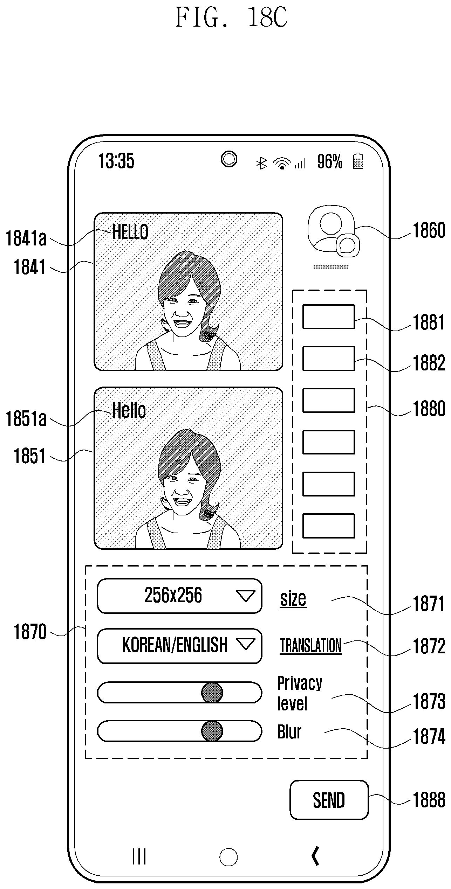

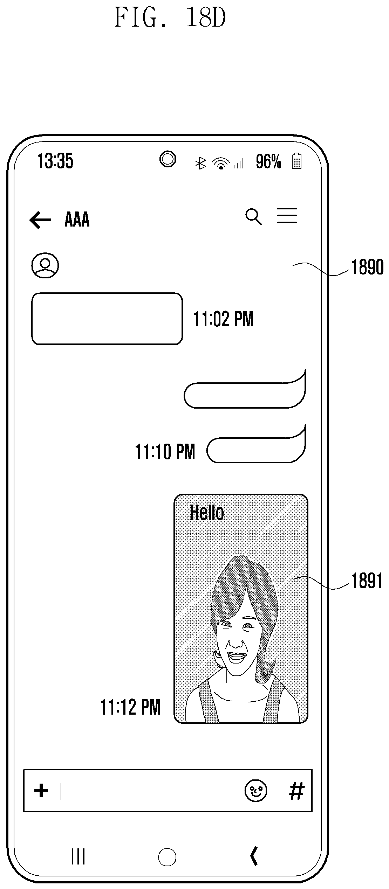

FIGS. 18A, 18B, 18C, and 18D are diagrams illustrating operations of an electronic device for processing and sharing an image according to an embodiment. When instructions stored in an electronic device (e.g., the electronic device 201) are executed by a processor of the electronic device, the electronic device may perform operations of FIGS. 18A, 18B, 18C, and 18D.

Referring to FIG. 18A, the electronic device may display an execution screen of a second application (e.g., a message application). For example, the electronic device may display the application execution screen including a message window 1810 for showing a message having been exchanged with a counterpart. As another example, the electronic device may display, together with the message window 1810, a UI element 1820 for loading, into the execution screen, a list of applications functionally connected to the displayed application execution screen. When the UI element 1820 is selected by a user, the electronic device may display the application execution screen including an application list 1830.

Referring to FIG. 18B, the electronic device may display images 1840 provided by a first application (e.g., a gallery application). For example, the electronic device may display the images 1840, based on selection of an icon 1831 corresponding to the first application from the application list 1830 (FIG. 18A). For example, the electronic device may display the images 1840 by classifying the images according to dates and locations at which the images have been generated (e.g., captured). In an embodiment, based on selection of one or more of the images 1840 (e.g., touching of a first image 1841), the electronic device may display a menu (alternatively expressed as a UI or a UX) 1850 for supporting interaction with the user with respect to sharing of the selected image. For example, the electronic device may display the menu 1850 including an item 1851 for processing the selected image and an item 1852 for sending the selected image. When the send item 1852 is selected, the electronic device may display the selected image (e.g., display the selected image in the message window 1810) and transmit the selected image to an electronic device of the counterpart through a sharing member (e.g., the second application). The electronic device may display an indicator for enabling the user to distinguish between a selected image and an unselected image. For example, the electronic device may display a check pattern 1841a on the selected image 1841.

Referring to FIG. 18C, based on selection of processing of the first image 1841 by the user (e.g., touching of the process item 1851 (FIG. 18B)), the electronic device may display a screen for processing the first image 1841.

According to an embodiment, the electronic device may identify (and/or extract) a feature (or an attribute) of the first image 1841, based on sharing member information (e.g., information indicating a function or service provided by the second application having invoked the first application) and/or sharing-related information (e.g., when a provided service is message transmission, a default value related to a size (a data amount) of a message transmittable at one time). The electronic device may display a processing screen including a second image 1851 generated by processing the first image 1841, based on the identified feature of the first image 1841. For example, the electronic device may identify a size of the first image 1841 and generate the second image 1851 by processing the first image 1841 to have a size (e.g., 512 (width) * 512 (height)) designated as a default value. As another example, based on configuring of Korean/English translation as a translation default value, the electronic device may extract Korean text 1841a from the first image 1841, convert the Korean text 1841a into English text 1851a, and display the second image 1851 including the English text 1851a. The electronic device may use a regeneration module (e.g., the first regeneration module 270 and/or the second regeneration module 280 in FIG. 2) in order to process the first image 1841 and obtain the second image 1851.

According to an embodiment, the electronic device may display the processing screen in which the first image 1841 is excluded. The electronic device may display the first image 1841 to be relatively smaller than the second image 1851. For example, instead of displaying the first image 1841, the electronic device may display an indicator (e.g., a thumbnail or text indicating "original") for identifying the first image 1841.

According to an embodiment, the electronic device may display the processing screen including an indicator indicating a sharing member. For example, the electronic device may display a contact icon 1860 indicating a counterpart with whom a message is exchanged through the second application having invoked the first application.

According to an embodiment, the electronic device may display the processing screen including a menu 1870 for enabling the user to select an attribute (or a feature) of the second image 1851. For example, the electronic device may display the menu 1870 including an item 1871 for changing a size different from the default value (e.g., 512 * 512). As another example, the electronic device may display the menu 1870 including an item 1872 for translation to a different language (e.g., German) instead of Korean/English translation configured as the default value. As another example, the electronic device may display the menu 1870 including an item 1873 for adjusting a protection level of personal information. As another example, the electronic device may display the menu 1870 including an item 1874 for blurring a specific object in the second image 1851. The electronic device may additionally process and display the second image 1851, based on a user input that is input to the electronic device through the menu 1870.

According to an embodiment, the electronic device may display the processing screen including a menu 1880 for enabling the user to change the sharing member and/or the counterpart who is to receive the second image 1851. For example, when an application icon 1881 is selected in the menu 1880, the electronic device may change the sharing member to an application corresponding to the selected application icon 1881. The electronic device may replace the icon 1860 with the application icon 1881. As another example, when a contact icon 1882 is selected in the menu 1880, the electronic device may change the target who is to receive the second image 1851 to a counterpart corresponding to the selected contact icon 1882. The electronic device may replace the icon 1860 with the contact icon 1882.

According to an embodiment, the icon 1860 may be an icon indicating a sharing member (e.g., an application selected from the application list 1830). When the user selects the icon 1860, the electronic device may display a sharing member list (e.g., a sharing member (e.g., the application list 1830)) again so as to enable the user to change the sharing member.

According to an embodiment, the menu 1880 may include a list indicating information of a recipient who is to receive a target to be shared (e.g., the second image 1851). Each of the icons 1881 and 1882 in the menu 1880 may be an icon representing a recipient name from contacts stored in the electronic device. The electronic device may configure the list by using an address book corresponding to an application selected as a sharing member. The electronic device may also configure the list by using an address book corresponding to another application. For example, when the user selects an icon (e.g., the icon 1881 or 1882) from the list, the electronic device may display an indicator indicating that the icon has been selected. For example, a color or a border of the icon may be changed. For example, a check pattern may be displayed on the icon. As another example, when the user selects an icon (e.g., the icon 1881 or 1882) from the list, the electronic device may change a default value of a menu for processing an image, based on information on a selected recipient. For example, when a recipient stored with a German name is selected, the electronic device may change a default translation to German and, based on the changed default translation, convert languages included in the image into German. As another example, when a phone number of the selected recipient is an Arabic-region phone number, the electronic device may identify that a hand sign or gesture included in a corresponding photo is a hand sign taboo in an Arabic region and may transform the hand sign into another form and display the transformed hand sign. According to an embodiment, a privacy level and/or a degree of blurring configured as a default value may be changed according to selection of a recipient. For example, when a selected recipient is a family member, the electronic device may display all recipient information. For example, when a selected recipient is identified, by referring to history data stored in the electronic device, as a recipient with whom no previous conversation or contact exists, the electronic device may change a default configuration to increase the privacy level and process and display a target to be shared according to the changed configuration.

Referring to FIG. 18D, the electronic device may display an execution screen 1890 of the application determined as the sharing member, the execution screen including a modification image 1891 obtained by processing based on the feature extracted (and/or identified) from the original image. For example, when a send button 1888 (see FIG. 18C) is selected, the electronic device may load the execution screen 1890 from a memory and display the modification image 1891 (e.g., the second image 1851 (FIG. 18B)) in the execution screen. In addition, the electronic device may transmit the modification image 1891 to an electronic device of the counterpart through the sharing member.

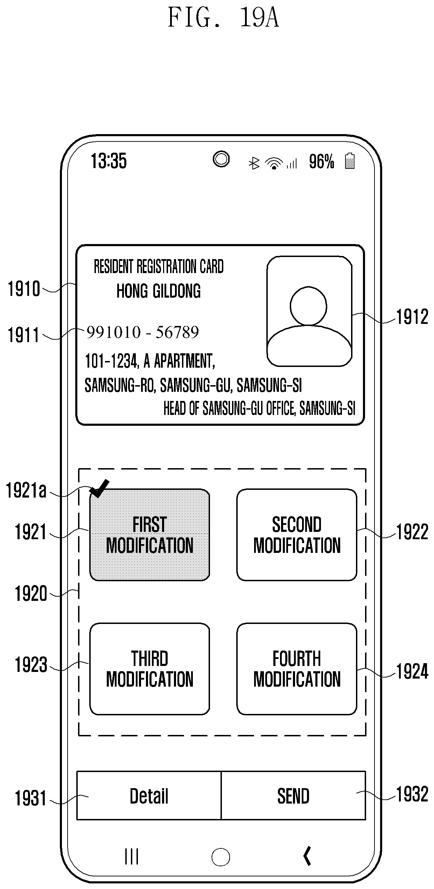

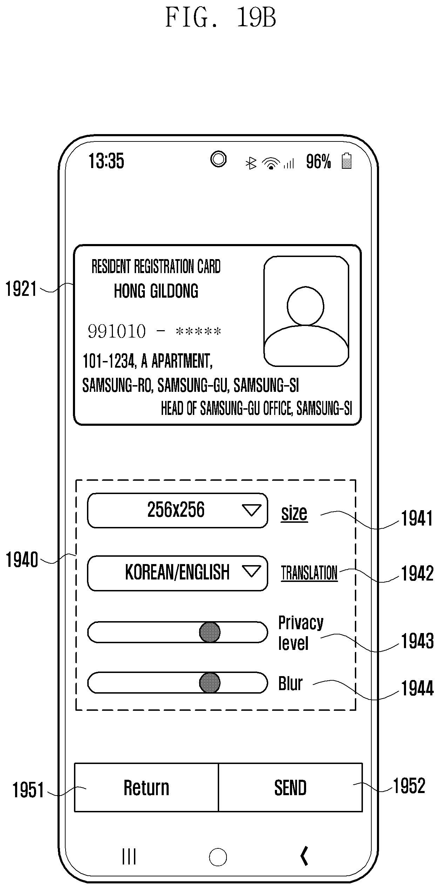

FIGS. 19A and 19B are diagrams illustrating operations of an electronic device for processing and sharing an image according to an embodiment. When instructions stored in an electronic device (e.g., the electronic device 201) are executed by a processor of the electronic device, the electronic device may perform operations of FIGS. 19A and 19B.

Referring to FIG. 19A, the electronic device may display an original image 1910 selected for sharing. The electronic device may display a modification image 1920 generated by processing the original image 1910 so that at least a part of the original image 1910 is not visually exposed, based on a designated protection level of personal information (privacy level). The electronic device may display the modification image 1920 together with the original image 1910.

According to an embodiment, the electronic device may identify that the original image 1910 includes a resident registration card as sensitive information by performing character recognition on the original image 1910. For example, the electronic device may use a regeneration module (e.g., the first regeneration module 270 and/or the second regeneration module 280 in FIG. 2) or an OCR module for character recognition in an image. For example, the electronic device may process the resident registration card according to designated privacy levels to obtain and display multiple modifications. The electronic device may use the regeneration module (e.g., the first regeneration module 270 and/or the second regeneration module 280 in FIG. 2) to obtain a modification. The electronic device may generate a first modification 1921 having a first privacy level. For example, the first modification 1921 may be obtained by replacing, among a resident registration number 1911, the numbers other than a date of birth with other characters (e.g., *). The electronic device may generate a second modification 1922 having a second privacy level. The second modification 1922 may be obtained by replacing all numbers of the resident registration number 1911 with other characters (e.g., *). The electronic device may generate a third modification 1923 having a third privacy level. For example, the third modification 1923 may be obtained by blurring a photo 1912. The electronic device may generate a fourth modification 1924 having a fourth privacy level. The fourth modification 1924 may be obtained by replacing the photo 1912 with a different image.

According to an embodiment, the electronic device may display a menu including an item 1931 for additionally processing a modification selected by a user in the modification image 1920 and an item 1932 for sending the modification selected by the user in the modification image 1920. When the send item 1932 is selected, the electronic device may display the selected modification (e.g., display the selected modification in the message window 1790 or 1810) and transmit the selected modification to an electronic device of a counterpart through a sharing member (e.g., the second application). For example, the electronic device may display an indicator for enabling the user to distinguish between a selected modification and an unselected modification. For example, the electronic device may display a check pattern 1921a on the selected first modification 1921.

Referring to FIG. 19B, based on selection of additional processing of a modification by the user (e.g., touching of the process item 1931 (FIG. 19A)), the electronic device may display a screen for additionally processing the modification.

According to an embodiment, the electronic device may display, together with the selected first modification 1921, a menu 1940 for enabling the user to select an attribute (or a feature) of the first modification 1921. For example, the electronic device may display the menu 1940 including an item 1941 for changing a size of the first modification 1921. As another example, the electronic device may display the menu 1940 including an item 1942 for translating text in the first modification 1921. As another example, the electronic device may display the menu 1940 including an item 1943 for adjusting a protection level of personal information. As another example, the electronic device may display the menu 1940 including an item 1944 for blurring a specific object in the first modification 1921. The electronic device may additionally process the first modification 1921, based on a user input that is input to the electronic device through the menu 1940, and display the additionally processed first modification instead of the first modification 1921.

According to an embodiment, the electronic device may display a second menu including an item 1951 for returning, without additional processing, to the screen of FIG. 19A corresponding to a previous stage, and an item 1952 for transmitting the modification having been additionally processed through the menu 1940.

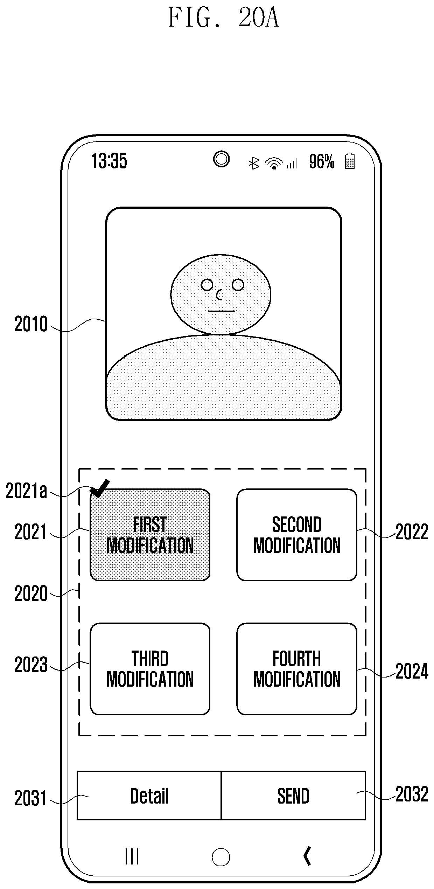

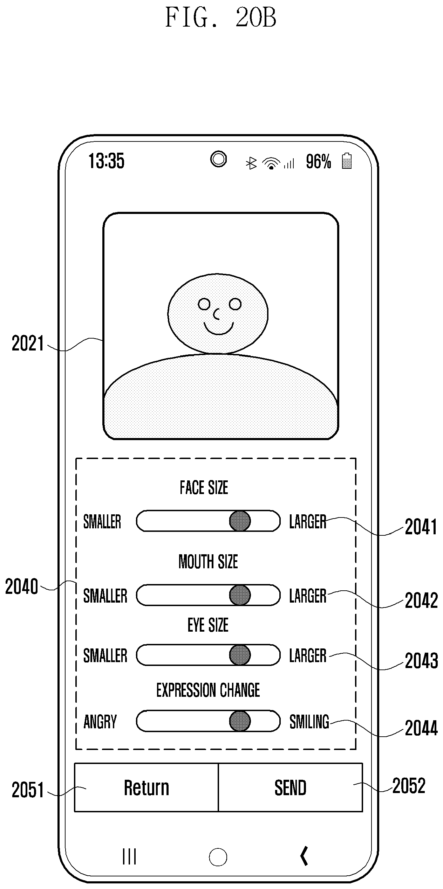

FIGS. 20A and 20B are diagrams illustrating operations of an electronic device for processing and sharing an image according to an embodiment. When instructions stored in an electronic device (e.g., the electronic device 201) are executed by a processor of the electronic device, the electronic device may perform operations of FIGS. 20A and 20B.

Referring to FIG. 20A, the electronic device may display an original image 2010 selected for sharing. The electronic device may display a modification image 2020 generated by processing a face in the original image 2010. The electronic device may display the modification image 2020 together with the original image 2010.

According to an embodiment, the electronic device may identify that the original image 2010 includes a face by performing object recognition on the original image 2010. The electronic device may process the face in various ways to obtain and display multiple modifications. For example, the electronic device may obtain and display a first modification 2021 in which the face is modified to a smiling face, a second modification 2022 in which the face is modified to a crying face, a third modification 2023 in which the face is emphasized compared with a background, and/or a fourth modification 2024 obtained by processing the face to be clean and bright. For example, the electronic device may use a regeneration module (e.g., the first regeneration module 270 and/or the second regeneration module 280 in FIG. 2) to perform object recognition on the original image 2010 and obtain a modification.

According to an embodiment, the electronic device may display a menu including an item 2031 for additionally processing a modification selected by a user in the modification image 2020 and an item 2032 for sending the modification selected by the user in the modification image 2020. When the send item 2032 is selected, the electronic device may display the selected modification (e.g., display the selected modification in the message window 1790 or 1810) and transmit the selected modification to an electronic device of a counterpart through a sharing member (e.g., the second application). The electronic device may display an indicator for enabling the user to distinguish between a selected modification and an unselected modification. For example, the electronic device may display a check pattern 2021a on the selected first modification 2021.

Referring to FIG. 20B, based on selection of additional processing of a modification by the user (e.g., touching of the process item 2031 (FIG. 20A)), the electronic device may display a screen for additionally processing the modification.

According to an embodiment, the electronic device may display, together with the selected first modification 2021, a menu 2040 for enabling the user to select an attribute (or a feature) of the first modification 2021. For example, the electronic device may display the menu 2040 including an item 2041 for changing a size of the face in the first modification 2021. As another example, the electronic device may display the menu 2040 including an item 2042 for changing a size of the mouth in the first modification 2021. As another example, the electronic device may display the menu 2040 including an item 2043 for changing a size of the eyes in the first modification 2021. As another example, the electronic device may display the menu 2040 including an item 2044 for changing a facial expression in the first modification 2021. The electronic device may additionally process the first modification 2021, based on a user input that is input to the electronic device through the menu 2040, and display the additionally processed first modification instead of the first modification 2021.

According to an embodiment, the electronic device may display a second menu including an item 2051 for returning, without additional processing, to the screen of FIG. 20A corresponding to a previous stage, and an item 2052 for transmitting the modification having been additional processed through the menu 2040.

According to an embodiment, an electronic device (e.g., the electronic device 201 in FIG. 2) includes a touch-sensitive display, a processor, and a memory configured to store a first application, a second application, and instructions which are executed by the processor. The instructions, when executed by the processor, may cause the electronic device to receive, from the display, a first user input requesting first content provided by the first application to be shared, display, on the display, a user interface supporting interaction with a user with respect to regeneration of the first content, receive a second user input from the display through the user interface, obtain second content generated by processing the first content, based on the second user input, and configure the second content to be usable by the second application.

The instructions may cause the electronic device to display an application list including the second application on the display, and configure the second content to be usable by the second application, based on reception, from the display, of the user's selection of the second application from the application list.

The instructions may cause the electronic device to input, as an input value, the first content and the second user input to an artificial intelligence model which is machine-learned to understand natural language and, based on the understanding, regenerate content, and obtain the second content from an output value output from the artificial intelligence model.

The instructions may cause the electronic device to display, on the display, the user interface including a UI element supporting interaction with the user to determine a type of the second content, and include, in the input value, information on the type determined through the UI element and input the input value to the artificial intelligence model.

The instructions may cause the electronic device to input, to the artificial intelligence model and as an input value, information indicating an image or video as the information on the type.

The first content may include an image, and the instructions may cause the electronic device to identify a format usable in the second application, and include, in the input value, information indicating the identified format and input the input value to the artificial intelligence model.

The instructions may cause the electronic device to display, on the display, the user interface including a UI element supporting interaction with the user to determine an attribute of the second content, and input, as an input value, information on the attribute determined through the UI element to the artificial intelligence model as a part of the second user input.

The instructions may cause the electronic device to display the second content on the display, receive the user's response to the second content from the display, based on the response being negative, request the artificial intelligence model to perform content regeneration, and based on the response being positive, configure the second content to be usable by the second application.

The electronic device may further include a communication circuit connected to the processor and configured for communication with a server having the artificial intelligence model, wherein the instructions cause the electronic device to, transmit the second user input and the first content to the server through the communication circuit, and receive the second content from the server through the communication circuit.

The instructions may cause the electronic device to display, on the display, the user interface including a keypad and an input field for displaying text which the user inputs to the electronic device by manipulating the keypad, and input, as an input value, the text to the artificial intelligence model as at least a part of the second user input.

The first content may include an image, and the instructions may cause the electronic device to configure text extracted from the image to be usable by the second application.

According to an embodiment, a method for operating an electronic device (e.g., the electronic device 201 in FIG. 2) may include receiving a first user input requesting first content provided by the first application to be shared, displaying a user interface supporting interaction with a user with respect to processing of the first content, receiving a second user input through the user interface, obtaining second content generated by processing the first content, based on the second user input, and configuring the second content to be usable by the second application.

The obtaining of the second content may include inputting, as an input value, the first content and the second user input to an artificial intelligence model which is machine-learned to understand natural language and, based on the understanding, regenerate content, and obtaining the second content from an output value output from the artificial intelligence model.

The method may further include displaying the user interface including a UI element supporting interaction with the user to determine a type of the second content, and including, in the input value, information on the type determined through the UI element and inputting the input value to the artificial intelligence model.

The first content may include an image, and the method may further include identifying a format usable in the second application, and including, in the input value, information indicating the identified format and inputting the input value to the artificial intelligence model.

According to an embodiment, an electronic device (e.g., the electronic device 201 in FIG. 2) includes a display, a processor, and a memory configured to store instructions. The instructions, when executed by the processor, may cause the electronic device to display, on the display, a first screen for selecting a sharing member using second content associated with first content, based on a first user input that is input to the electronic device with respect to the first content, determine the sharing member using the second content, based on a second user input that is input to the electronic device with respect to the first screen, extract a feature of the first content, based on information stored in the electronic device and information on the sharing member, and display a second screen for modifying the extracted feature on the display, generate the second content by processing the extracted feature, based on a third user input that is input to the electronic device with respect to the second screen, and display the second content on a third screen associated with the sharing member.

The instructions, when executed by the processor, may cause the electronic device to, based on a fourth user input that is input to the electronic device with respect to the second content, transmit the second content to an external device through a communication circuit of the electronic device.

The information stored in the electronic device may include information indicating a size of the second content. The information on the sharing member may include information indicating a service provided by the sharing member.

The instructions, when executed by the processor, may cause the electronic device to, based on that personal information required to be protected is included in the first content, process a part of the first content so as not to be exposed.

The instructions, when executed by the processor, may cause the electronic device to display the first content and the second content on the third screen.

In the above description, the prefixes "first," "second," and "third," etc., are merely for distinguishing between terms with the same name, and no special meaning, such as importance or order, is assigned to the prefixes themselves.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an applicationspecific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a touch-sensitive display;
a processor; and
a memory configured to store a first application, a second application, and instructions which are executed by the processor,
wherein the instructions, when executed by the processor, cause the electronic device to:
receive, from the display, a first user input requesting to share first content provided by the first application;
display, on the display, a user interface supporting interaction with a user in connection with regeneration of the first content;
receive a second user input from the display through the user interface;
obtain second content generated by processing the first content, based on the second user input; and
configure the second content to be usable by the second application.

2. The electronic device of claim 1, wherein the instructions cause the electronic device to:
display an application list including the second application on the display; and
based on receiving, from the display, the user's selection of the second application from the application list, configure the second content to be usable by the second application.

3. The electronic device of claim 1, wherein the instructions cause the electronic device to:
input, as an input value, the first content and the second user input into an artificial intelligence model machine-learned to understand natural language and, based on the understanding, regenerate content; and
obtain the second content from an output value output from the artificial intelligence model.

4. The electronic device of claim 3, wherein the instructions cause the electronic device to:
display, on the display, the user interface including a UI element supporting interaction with the user to determine a type of the second content; and
input, into the artificial intelligence model, the input value including information indicating an image or video as information on the type determined through the UI element.

5. The electronic device of claim 3, wherein the first content comprises an image, and
wherein the instructions cause the electronic device to:
identify a format usable in the second application; and
input, into the artificial intelligence model, the input value including information indicating the identified format.

6. The electronic device of claim 3, wherein the instructions cause the electronic device to:
display, on the display, the user interface including a UI element supporting interaction with the user to determine an attribute of the second content; and
input, as an input value, information on the attribute determined through the UI element into the artificial intelligence model as a part of the second user input.

7. The electronic device of claim 3, wherein the instructions cause the electronic device to:
display the second content on the display;
receive, from the display, the user's response to the second content;
based on the response being negative, request the artificial intelligence model to perform content regeneration; and
based on the response being positive, configure the second content to be usable by the second application.

8. The electronic device of claim 3, further comprising a communication circuit connected to the processor and configured to communicate with a server having the artificial intelligence model,
wherein the instructions cause the electronic device to:
transmit the second user input and the first content to the server through the communication circuit; and
receive the second content from the server through the communication circuit.

9. The electronic device of claim 3, wherein the instructions cause the electronic device to:
display, on the display, the user interface including a keypad and an input field for displaying text which the user inputs to the electronic device by manipulating the keypad; and
input, as an input value, the text into the artificial intelligence model as at least a part of the second user input.

10. The electronic device of claim 1, wherein the first content comprises an image, and
wherein the instructions cause the electronic device to configure text extracted from the image to be usable by the second application.

11. A method for operating an electronic device, the method comprising:
receiving a first user input requesting to share first content provided by a first application;
displaying a user interface supporting interaction with a user in connection with processing of the first content;
receiving a second user input through the user interface;
obtaining second content generated by processing the first content, based on the second user input; and
configuring the second content to be usable by the second application.

12. An electronic device comprising:
a display;
a processor; and
a memory configured to store instructions,
wherein the instructions, when executed by the processor, cause the electronic device to:
based on a first user input input to the electronic device in connection with first content, display, on the display, a first screen for selecting a sharing member using second content associated with the first content;
based on a second user input input to the electronic device in connection with the first screen, determine the sharing member using the second content;
extract a feature of the first content, based on information stored in the electronic device and information on the sharing member, and display, on the display, a second screen for modifying the extracted feature;
generate the second content by processing the extracted feature, based on a third user input input to the electronic device in connection with the second screen; and
display the second content on a third screen associated with the sharing member.

13. The electronic device of claim 12, wherein the instructions, when executed by the processor, cause the electronic device to, based on a fourth user input input to the electronic device in connection with the second content, transmit the second content to an external device through a communication circuit of the electronic device.

14. The electronic device of claim 12, wherein the information stored in the electronic device comprises information indicating a size of the second content, and
wherein the information on the sharing member comprises information indicating a service provided by the sharing member.

15. The electronic device of claim 12, wherein the instructions, when executed by the processor, cause the electronic device to:
based on the first content including personal information which needs to be protected, process a part of the first content so as not to be exposed; and
display the first content and the second content on the third screen.
